(19) Europäisches Patentamt
European Patent Office
Office européen des brevets

(11) EP 4 389 456 B1

(12) EUROPEAN PATENT SPECIFICATION

(45) Date of publication and mention of the grant of the patent:
**01.04.2026 Bulletin 2026/14**

(21) Application number: **23213358.7**

(22) Date of filing: **30.11.2023**

(51) International Patent Classification (IPC):
***B60C 1/00*** $^{(2006.01)}$ ***B60C 11/00*** $^{(2006.01)}$
***B60C 11/03*** $^{(2006.01)}$ ***B60C 11/13*** $^{(2006.01)}$

(52) Cooperative Patent Classification (CPC):
**B60C 1/0016; B60C 11/005; B60C 11/0306; B60C 11/033; B60C 11/0332; B60C 11/13;**
B60C 11/032; B60C 2011/0016; B60C 2011/0025; B60C 2011/0344; B60C 2011/0348; B60C 2011/0353

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.12.2022 JP 2022204880**
**25.09.2023 JP 2023160694**

(43) Date of publication of application:
**26.06.2024 Bulletin 2024/26**

(73) Proprietor: **Sumitomo Rubber Industries, Ltd.**
**Kobe-shi, Hyogo 651-0072 (JP)**

(72) Inventor: **KITAMURA, Naoya**
**Kobe-shi, Hyogo, 651-0072 (JP)**

(74) Representative: **Manitz Finsterwald**
**Patent- und Rechtsanwaltspartnerschaft mbB**
**Martin-Greif-Straße 1**
**80336 München (DE)**

(56) References cited:
**EP-A1- 3 446 890**
**EP-A1- 3 950 386**
**KR-B1- 102 127 453**
**US-A1- 2016 001 599**
**US-A1- 2016 176 233**
**US-A1- 2017 305 199**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNICAL FIELD

The present invention relates to a tire.

### BACKGROUND OF THE INVENTION

Since there is a trade-off relationship between grip performance and fuel efficiency, for example, JP 3213127 B describes that a tread part of a tire is produced to have a two layer structure of a base rubber located on an inner side of a tire radial direction and a cap rubber located on its outer side in the tire radial direction (a so-called cap/base structure) and a rubber composition with a small loss tangent (tan $\delta$) is applied to the base rubber, thereby improving steering stability and fuel efficiency of the tire.

Known tires are also disclosed in the documents EP 3950386 A, US 2016/001599 A and US 2016/176233 A.

### SUMMARY OF THE INVENTION

In a case of such a tire as described above, a loss tangent, tan $\delta$, of the cap rubber layer is high, and thus wet grip performance is high in mint condition. However, the cap rubber layer hardens due to thermal aging caused by self-generated heat as it runs. Therefore, there is a concern that rigidity of a tread ground-contacting surface becomes high, followability to a road surface gets lost, and wet grip performance may deteriorate.

It is an object of the present invention to provide a tire with improved wet grip performance after abrasion.

The present invention relates to a tire as defined in independent claim 1.

Preferred embodiments are defined in the dependent claims.

According to the present invention, a tire with improved wet grip performance after abrasion can be provided.

### BRIEF DESCRIPTION OF THE DRAWINGS

FIG. 1 is a development view of a part of a tread part of a tire according to one embodiment of the present invention.

FIG. 2 is a view showing a cross section of a part of the tread part of the tire according to one embodiment of the present invention along a plane passing through a tire rotation axis.

FIG. 3 is a view schematically showing a ground-contacting region of a tread surface.

FIG. 4 is a development view of a part of a tread part of a tire in which a land part nearest to a tire center line comprises a widening circumferential groove.

FIG. 5 is a view showing a cross section of the widening circumferential groove of FIG. 4 along a plane passing through a tire rotation axis.

FIG. 6 is a development view of a part of a tread part of a tire comprising a shoulder region provided with a small opening.

FIG. 7 is a development view of a part of a tread part of a tire comprising a shoulder region provided with a circumferential narrow groove.

### DETAILED DESCRIPTION

A tire that is one embodiment of the present invention is a tire comprising a tread part, wherein the tread part at least comprises a first rubber layer located on an outermost side in a tire radial direction, and a second rubber layer adjacent to an inner side of the first rubber layer in the tire radial direction, wherein a tread surface of the tread part comprises two or more circumferential main grooves extending in a tire circumferential direction, and land parts partitioned off by the circumferential main grooves, wherein at least one circumferential main groove among the circumferential main grooves is formed such that the deepest part of its groove bottom is located on an inner side in the tire radial direction with respect to an outermost part of the second rubber layer within a land part adjacent to the at least one circumferential main groove, wherein a ground-contacting region of the tread surface is divided into thirds by two straight lines that trisect a ground-contacting maximum width L of the ground-contacting region and that are parallel to the tire circumferential direction, a central portion of them is referred to as a crown region, and each portion on the both sides of the crown region is referred to as a shoulder region, wherein, when a land ratio of the crown region is referred to as $LAND_{Cr}$ and a land ratio of the shoulder region is referred to as $LAND_{Sh}$, $LAND_{Cr}$ and $LAND_{Sh}$ satisfy the following inequality: (1) $LAND_{Sh}/LAND_{Cr} > 1.00$, wherein the first rubber layer is composed of a first rubber composition, the first rubber composition comprising a

rubber component comprising a styrene-butadiene rubber, and silica, wherein the second rubber layer is composed of a second rubber composition, the second rubber composition comprising a rubber component comprising a styrene-butadiene rubber, and silica, and wherein, when a tan δ at 0°C of the first rubber composition is referred to as 0°C tan δ1 and a tan δ at 0°C of the second rubber composition is referred to as 0°C tan δ2, 0°C tan δ1 and 0°C tan δ2 satisfy the following inequality: (2) 0°C tan δ2/0°C tan δ1 > 1.00.

A mechanism by which wet grip performance after abrasion is improved in the present invention is considered as follows, although the following consideration is not intended to be bound by any theory.

That is, (1) when 0°C tan δ of the second rubber layer located on the inner side with respect to a surface of the tread part is increased, the second rubber layer with increased 0°C tan δ appears after abrasion, and comes into contact with the ground at the central part of each land part of the tread, so that friction against a wet road surface easily occurs. (2) Moreover, in this case, the first rubber layer plays a role in supporting the ends of the land parts, whereby a phase difference between an input and a response is decreased, so that it becomes easy for counter force of the land part to be generated. (3) Furthermore, when the land ratio of the shoulder region is made to be higher than the land ratio of the crown region, the rigidity of the central part of the tread is decreased, so that it becomes easy for the tread surface to contact the ground in its entirety at the time of the ground-contact. Then, with cooperation of these (1) to (3), it is considered that wet grip performance after abrasion is improved.

0°C tan δ2, $LAND_{Cr}$, and $LAND_{Sh}$ preferably satisfy the following inequality,

$$(3)\ 0^\circ C \tan \delta 2 \times (LAND_{Sh}/LAND_{Cr}) > 0.50.$$

When a product of 0°C tan δ of the second rubber layer and the ratio of the land ratio of the shoulder region to the land ratio of the crown region is increased, it is considered that it becomes easy to cause friction on the tread surface when it contacts the ground after abrasion.

0°C tan δ1, $LAND_{Cr}$, and $LAND_{Sh}$ preferably satisfy the following inequality,

$$(4)\ 0^\circ C \tan \delta 1 \times (LAND_{Sh}/LAND_{Cr}) < 3.00.$$

When the product of 0°C tan δ of the first rubber layer and the ratio of the land ratio of the shoulder region to the land ratio of the crown region is suppressed, it is considered that counter force can be easily generated while securing ground-contact.

When a glass transition temperature in °C of the second rubber composition is referred to as Tg2, Tg2 is preferably higher than -30°C.

When the glass transition temperature of the second rubber layer is increased, heat generation of the second rubber layer is increased, and it is considered that friction can be easily generated in the center of each land part after abrasion.

When a tan δ at 30°C of the first rubber composition is referred to as 30°C tan δ1, 30°C tan δ1 is preferably less than 0.30.

When 30°C tan δ of the first rubber layer is suppressed, a phase difference between an input and a response of the first rubber layer is decreased, and it is considered that counter force can be made to easily occur.

A length, in a tire width direction, of a land part among the land parts that is located on the tire center line or is nearest to the tire center line in a case where a circumferential main groove is present on the tire center line, preferably increases from the outer side toward the inner side in the tire radial direction.

Since the first rubber layer plays a role in supporting the ends of the land parts after abrasion, it is considered that, it becomes easier for the first rubber layer to support the ends of the land parts when the above-described configuration is adopted.

When a styrene content in % by mass of the rubber component of the first rubber composition is referred to as St1 and a styrene content in % by mass of the rubber component of the second rubber composition is referred to as St2, at least one of St1 and St2 is less than 16.0.

When the styrene content of the rubber component of each rubber composition constituting the first rubber layer or the second rubber layer is decreased, formation of a domain by a styrene part (styrene-part domain) in the rubber composition is suppressed in the first rubber layer, heat generation due to the styrene-part domain to surrounding rubber molecular chains is suppressed, and thus it is considered that responsiveness can be easily improved. Moreover, it is considered that the second rubber layer can be made to easily follow a subtle response from a road surface.

At least one rubber component of the rubber component of the first rubber composition and the rubber component of the second rubber composition preferably comprises an isoprene-based rubber.

When the rubber composition constituting the first rubber layer or the second rubber layer comprises an isoprene-based rubber, it becomes easy for the rubber composition to cause counter force due to influence of the

isoprene-based rubber that may easily generate force against large deformation, and it is considered that responsiveness can be easily improved.

The tread surface preferably comprises a widening circumferential groove whose groove width widens on the inner side in the tire radial direction.

Since the groove width of the widening circumferential groove widens after abrasion, drainage performance is improved, and it is considered that wet grip performance is improved.

The widening circumferential groove is preferably present on a land part located on the tire center line or on a land part nearest to the tire center line in a case where a circumferential main groove is present on the tire center line.

Since the groove width of the widening circumferential groove widens after abrasion, drainage performance on the central part in the tire width direction is improved, and it is considered that wet grip performance is improved.

The tread surface of the shoulder region preferably comprises one or more small openings whose opening areas are larger than 0.1 $mm^2$ and smaller than 15 $mm^2$.

Since the small openings contribute to improvement in drainage performance, drainage performance on the shoulder region is improved, and thus it is considered that wet grip performance is improved.

The tread surface of the shoulder region preferably comprises at least one or more circumferential narrow grooves.

Since the circumferential narrow grooves contribute to improvement in drainage performance, drainage performance on the shoulder region is improved, and thus it is considered that wet grip performance is improved.

[Definition]

A "standardized state" means a state in which a tire is rim-assembled to a standardized rim, filled with air at a standardized internal pressure, and applied with no load. Unless otherwise noted, a "size or the like of each part of a tire" is defined as a value specified in a standardized state.

The "standardized rim" is a rim, in a standard system including a standard on which the tire is based, defined for each tire by the standard. The standardized rim refers to, for example, a "standard rim" in applicable sizes described in "JATMA YEAR BOOK" in JATMA (Japan Automobile Tyre Manufacturers Association, Inc), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.). JATMA, ETRTO, and TRA are referred to in this order, and when an applicable size is found during reference to the standard, a standardized rim is based on that standard. Additionally, if the tire is not defined in the above-described standard system, the "standardized rim" refers to a rim having the smallest rim diameter and secondly having the narrowest rim width among rims that can be rim-assembled to the tire and retain internal pressure, that is, rims that do not cause air leakage between the rim and the tire.

A "standardized internal pressure" is an air pressure, in a standard system including a standard on which the tire is based, defined for each tire by the standard. The standardized internal pressure refers to, for example, the "MAXIMUM AIR PRESSURE" in JATMA, "INFLATION PRESSURE" in ETRTO, or the "maximum value" described in the table "TIRE LOAD LIMITS AT VARIOUS COLD INFLATION PRESSURES" in TRA. Like the standardized rim, JATMA, ETRTO, and TRA are referred to in this order, and when an applicable size is found during reference to the standard, a standardized internal pressure is based on that standard. Additionally, in a case of a tire whose size is not defined in the standard, the standardized internal pressure refers to a standardized internal pressure (provided that the standardized internal pressure is 250 kPa or more) for another tire size for which the standardized rim is described as a standard rim (and which is defined by the standard). Besides, in a case where a plurality of standardized internal pressures of 250 kPa or more are described, the standardized internal pressure refers to the minimum values among them.

A "standardized load" means a load, in a standard system including a standard on which the tire is based, defined for each tire by the standard. The standardized load refers to, for example, "MAXIMUN LOAD CAPACITY" in JATMA, "LOAD CAPACITY" in ETRTO, or the "maximum value" described in the table "TIRE LOAD LIMITS AT VARIOUS COLD INFLATION PRESSURES" in TRA. Like the standardized rim and the standardized internal pressure, JATMA, ETRTO, and TRA are referred to in this order, and when an applicable size is found during reference to the standard, a standardized load is based on that standard. Additionally, in a case of a tire whose size is not defined in the standard, the standardized load WL (kg) is calculated as follows,

$$WL = 0.000011 \times V + 175,$$

$$V = \{(Dt/2)^{2-} - (Dt/2 - Ht)^2\} \times \pi \times Wt$$

where V represents a virtual volume of the tire ($mm^3$), Dt represents a tire outer diameter Dt (mm), Ht represents a tire cross-sectional height (mm), and Wt represents a tire cross-sectional width (mm).

A "tire cross-sectional width Wt" is a maximum width between outer surfaces of sidewalls excluding, if any, patterns, letters, or the like on the side surface of the tire, in a standardized state. A "tire cross-sectional height Ht" is a distance from a bottom surface of a bead part to an outermost surface of a tread, which is one-half of a difference between a tire outer diameter Dt of the tire and a nominal size of a rim diameter.

A "circumferential main groove" refers to a groove extending continuously in a tire circumferential direction and having a groove width of 4 mm or more in the tire width direction on a tread surface. The circumferential main groove may extend linearly in the circumferential direction, or in a wavy, sinusoidal, or zigzag shape. However, a widening circumferential groove described later is not included in circumferential main grooves. A "land part" refers to an area on the tread surface which is defined by circumferential main grooves, and there are cases where the land part is defined by two circumferential main grooves adjacent to each other and where the land part is defined by one circumferential groove located on the outermost side in the tire width direction and a tread end located on the outer side of that circumferential groove in the tire width direction.

A "circumferential narrow groove" refers to a groove extending continuously in the tire circumferential direction and having a groove width of less than 4 mm in the tire width direction on a tread surface. The circumferential narrow groove may extend linearly in the circumferential direction, or in a wavy, sinusoidal, or zigzag shape. However, the widening circumferential groove described later is not included in circumferential narrow grooves.

A "widening circumferential groove" refers to a groove extending continuously in the tire circumferential direction, wherein a groove width of the widening circumferential groove in the tire width direction becomes minimum on the tread surface, and the widening circumferential groove is configured to widen on the inner side in the tire radial direction. The widening circumferential groove may extend linearly in the circumferential direction, or in a wavy, sinusoidal, or zigzag shape.

A "ground-contacting region" refers to a region of the tread surface that contacts the ground when a standardized load is applied to a tire that is in a standardized state. The ground-contacting region is obtained by assembling the tire to a standardized rim, and filling the tire with air at a standardized internal pressure, followed by applying ink to a tire tread surface, applying a standardized load on the tire to press the tire tread surface on cardboard (a camber angle is 0°), and performing transcription. FIG. 3 schematically shows the ground-contacting region. When the ground-contacting region is divided into thirds by two straight lines that trisect its ground-contacting maximum width L and that are parallel to a tire circumferential direction, a central portion of them is referred to as "crown region", and each portion on the both sides of the crown region is referred to as a "shoulder region" (FIG. 3).

A "land ratio" is a ratio (%) of an area of a ground-contacting region excluding areas of grooves and sipes present on the ground-contacting region to a total area of the ground-contacting region in which all of the grooves and the sipes present on the ground-contacting region are filled. The total area of the ground-contacting region and the areas of the grooves and sipes for calculating the land ratio are obtained by assembling the tire to a standardized rim, filling the tire with air at a standardized internal pressure, and applying ink to a tire tread surface, followed by applying a standardized load on the tire to press the tire tread surface on cardboard (a camber angle is 0°), and performing transcription. The transcription is performed at five portions of the tire by rotating the tire in 72 degree increments in the circumferential direction. The land ratio is obtained as an average value of land ratios for the areas of these five inked portions. Besides, a "$LAND_{Cr}$" is a land ratio of the crown region, and a "$LAND_{Sh}$" is a land ratio of the shoulder region.

A "styrene content in % by mass of a rubber component" refers to a content obtained by calculating values each obtained by multiplying a styrene content of each of rubbers constituting the entire rubber component (100% by mass) by a content of each rubber in the entire rubber component, followed by totaling all of these values.

A "small opening" is a small opening present on a tread surface, which extends from an inner side of a tread and opens to the tread surface. Small openings are each present independent of one another and do not communicate with circumferential grooves, lateral grooves, or the like.

A "thickness (H) of a rubber layer constituting a tread part" is a thickness of a rubber layer measured on a normal line that passes through a center of each land part in a tire width direction and that is perpendicular to a tread surface. Besides, in a case where a land part comprises a circumferential narrow groove located at the center in the tire width direction, a thickness of a rubber layer can be calculated by recognizing straight lines connecting both corresponding ends of rubber layers present on groove walls of the circumferential narrow groove which walls face each other and by measuring a distance between the straight lines. Examples of the rubber layer constituting the tread part include a first rubber layer, a second rubber layer, and the like.

[Measuring method]

A "0°C tan δ" is a loss tangent measured using EPLEXOR series manufactured by gabo Systemtechnik GmbH under a condition of a temperature at 0°C, an initial strain of 10%, a dynamic strain of 2.5%, a frequency of 10 Hz, and an extension mode. In a case where a sample for measurement of a loss tangent is prepared by being cut out from a tread part of a tire, the sample is prepared by being cut out from an inner side of a targeted rubber layer to have a length of 20 mm, a

width of 4 mm, and a thickness of 1 mm such that a tire circumferential direction becomes a long side and a tire radial direction becomes a thickness.

A "30°C tan δ" is a loss tangent measured using EPLEXOR series manufactured by gabo Systemtechnik GmbH under a condition of a temperature at 30°C, an initial strain of 5%, a dynamic strain of 1%, a frequency of 10 Hz, and an extension mode. A sample for measurement is prepared in the same manner as in the case of 0°C tan δ.

A "glass transition temperature (Tg) of a rubber composition in °C" is determined as a temperature corresponding to the greatest value of tan δ (tan δ peak temperature) in a temperature distribution curve of a loss tangent tan δ in a range of -60°C to 40°C, wherein the temperature distribution curve is obtained by measurement performed using EPLEXOR series manufactured by gabo Systemtechnik GmbH under a condition of a frequency of 10 Hz, an initial strain of 10%, an amplitude of ±0.5%, and a temperature rising rate of 2°C/min. Besides, in a case where a value of tan δ continues to increase or decrease gradually with an increase of temperature in the measurement in the range of - 60°C to 40°C, the glass transition temperature of the rubber composition is defined as 40°C or -60°C from the above-described definition. Moreover, in a case where there are two or more temperature points at which the tan δ has the maximum value in the range of -60°C to 40°C, the lowest temperature point of these temperatures points is defined as a glass transition temperature of a rubber composition.

A "styrene content" is calculated by $^{1}$H-NMR measurement

A "vinyl content (1,2-bond butadiene unit amount) in mol%" is calculated according to JIS K 6239-2:2017 by an infrared absorption spectrometry.

A "cis content (cis-1,4-bond butadiene unit amount) in mol%" is calculated according to JIS K 6239-2:2017 by an infrared absorption spectrometry.

A "glass transition temperature (Tg) in °C" is measured by making a measurement according to JIS K 7121 using a differential scanning calorimeter (Q200) manufactured by TA Instruments Japan Inc. while increasing a temperature at a temperature rising rate of 10°C/min. In the present invention, particularly, a Tg of a styrene-butadiene rubber is measured.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation).

A "$N_2$SA of carbon black" is measured according to JIS K 6217-2:2017.

A "$N_2$SA of silica" is measured by a BET method according to ASTM D3037-93.

An "average primary particle size" can be calculated by making observations with a transmission or scanning electron microscope, measuring 400 or more primary particles observed in the field of view, and averaging them. The average primary particle size is applied to carbon black, silica, and the like.

A "softening point" is defined as a temperature at which a sphere drops when the softening point specified in JIS K 6220-1: 2001 is measured with a ring and ball softening point measuring device.

A "content of a plasticizing agent" also comprises an amount of a plasticizing agent contained in a rubber component extended with the plasticizing agent. Similarly, a "content of oil" also comprises an amount of oil contained in an oil extended rubber.

[Tire]

The tire of the present invention will be described below appropriately with reference to the drawings. However, the drawings are merely for illustration, and the present invention should not be interpreted to be subjected to limitation based on the drawings.

The tire of the present invention is a tire comprising a tread part, wherein the tread part at least comprises a first rubber layer located on an outermost side in a tire radial direction and a second rubber layer adjacent to an inner side of the first rubber layer in the tire radial direction, and wherein a tread surface of the tread part comprises two or more circumferential main grooves extending in a tire circumferential direction and land parts partitioned off by the circumferential main grooves. Here, at least one circumferential main groove among the circumferential main grooves is formed such that the deepest part of a groove bottom of the at least one circumferential main groove is located on an inner side in the tire radial direction with respect to an outermost part of the second rubber layer within a land part adjacent to the at least one circumferential main groove.

FIG. 1 is a development view of a part of a tread of a tire according to one embodiment of the present invention. In FIG. 1, the tread surface is divided into four land parts 3 by three circumferential main grooves 2. FIG. 2 shows a part of a cross section of the tire according to one embodiment of the present invention along a plane passing through a tire rotation axis. In Fig. 2, the tread part comprises a first rubber layer 4 located on the outermost side in a tire radial direction and a second rubber layer 5 adjacent to an inner side of the first rubber layer in the tire radial direction. Here, the deepest part of the groove bottom of the circumferential main groove 2 (the lower end in a depth D in FIG. 2) is formed to be located on an inner side in the tire radial direction with respect to the outermost part of the second rubber layer 5 within land parts 31 and

32 adjacent to the circumferential main grooves 2 (the upper end in a thickness H2 in FIG. 2).

In FIG. 2, according to the above definition, a thickness of the first rubber layer 4 constituting the tread part is H1 both in the land part 31 comprising a circumferential narrow groove in the center in the tire width direction and in the land part 32 not comprising any circumferential narrow grooves, and similarly, a thickness of the second rubber layer 5 constituting the tread part is H2 both in the land part 31 and in the land part 32.

FIG. 3 is a view schematically showing a ground-contacting region of the tread surface. In FIG. 3, L represents the ground-contacting maximum width of the ground-contacting region. Among three portions into which the ground-contacting region is divided by two straight lines that divide the L into thirds and that are parallel to the tire circumferential direction, a crown region located in the center is represented by Cr, and each of shoulder regions located on the both sides of the crown region is represented by Sh.

<Inequality (1), land ratio>

In the tire of the present invention, a land ratio of the crown region $LAND_{Cr}$ and a land ratio of the shoulder regions $LAND_{Sh}$ satisfy the following inequality,

$$(1)\ LAND_{Sh}/LAND_{Cr} > 1.00.$$

The right side of the inequality (1) is preferably 1.15, more preferably 1.50, further preferably 1.70. On the other hand, an upper limit of the value of $LAND_{Sh}/LAND_{Cr}$ can be, but not particularly limited to, for example, 2.00, 1.90, or 1.80.

<Inequality (2), 0°C tan δ>

In the tire of the present invention, when a tan δ at 0°C of a first rubber composition that is a rubber composition constituting the first rubber layer is referred to as 0°C tan δ1 and a tan δ at 0°C of a second rubber composition that is a rubber composition constituting the second rubber layer is referred to as 0°C tan δ2, 0°C tan δ1 and 0°C tan δ2 satisfy the following inequality,

$$(2)\ 0^{\circ}C\ \tan\delta 2/0^{\circ}C\ \tan\delta 1 > 1.00.$$

The right side of the inequality (2) is preferably 1.10, more preferably 1.35, further preferably 1.50, further preferably 1.70. On the other hand, an upper limit of the value of 0°C tan δ2/0°C tan δ1 can be, but not particularly limited to, for example, 2.00, 1.90, or 1.80.

Both the 0°C tan δ1 and 0°C tan δ2 can be appropriately adjusted by a type or a compounding amount of a rubber component constituting a rubber composition and a type or a compounding amount of an additive other than rubber components.

<Inequality (3), 0°C tan δ2 × ($LAND_{Sh}/LAND_{Cr}$)>

In the tire of the present invention, 0°C tan δ2, $LAND_{Cr}$, and $LAND_{Sh}$ preferably satisfy the following inequality,

$$(3)\ 0^{\circ}C\ \tan\delta 2 \times (LAND_{Sh}/LAND_{Cr}) > 0.50.$$

The right side of the inequality (3) is preferably 0.55, more preferably 0.60, further preferably 0.63. On the other hand, an upper limit of the value of 0°C tan δ2 × ($LAND_{Sh}/LAND_{Cr}$) can be, but not particularly limited to, for example, 1.60, 1.50, or 1.40.

<Inequality (4), 0°C tan δ1 × ($LAND_{Sh}/LAND_{Cr}$)>

In the tire of the present invention, 0°C tan δ1, $LAND_{Cr}$, and $LAND_{Sh}$ preferably satisfy the following inequality,

$$(4)\ 0^{\circ}C\ \tan\delta 1 \times (LAND_{Sh}/LAND_{Cr}) < 3.00.$$

The right side of the inequality (4) is preferably 2.00, more preferably 1.00, further preferably 0.80, further preferably 0.70, further preferably 0.60. On the other hand, a lower limit of the value of 0°C tan δ1 × ($LAND_{Sh}/LAND_{Cr}$) can be, but not particularly limited to, for example, 0.25, 0.30, or 0.35.

<Tg2>

In the tire of the present invention, when a grass transition temperature of the second rubber composition in °C is referred to as Tg2, Tg2 is preferably higher than -30°C.

Tg2 is preferably higher than -25°C, more preferably higher than - 20°C, from the viewpoint of wet grip performance. On the other hand, an upper limit value of Tg2 is, but not limited to, preferably lower than 15°C, more preferably lower than 5°C, further preferably lower than 0°C.

Tg2 can be appropriately adjusted by a type or a compounding amount of a rubber component constituting a rubber composition and a type or a compounding amount of an additive other than rubber components.

<30°C tan δ1 >

In the tire of the present invention, when a tan δ at 30°C of the first rubber composition is referred to as 30°C tan δ1, 30°C tan δ1 is preferably less than 0.30.

30°C tan δ1 is preferably less than 0.25, further preferably less than 0.22, further preferably less than 0.20, from the viewpoint of wet grip performance. On the other hand, a lower limit value of 30°C tan δ1 can be, but not particularly limited to, usually 0.10 or about 0.12.

30°C tan δ1 can be appropriately adjusted by a type or a compounding amount of a rubber component constituting a rubber composition and a type or a compounding amount of an additive other than rubber components.

<St1, St2>

In the tire of the present invention, when a styrene content of a rubber component of the first rubber composition in % by mass is referred to as St1 and a styrene content of a rubber component of the second rubber composition in % by mass is referred to as St2, at least one of St1 and St2 is less than 16.0.

<Widening circumferential groove>

In the tire of the present invention, the tread surface preferably comprises a widening circumferential groove whose groove width widens on the inner side in the tire radial direction. This is because the groove width of the widening circumferential groove widens after abrasion, so that drainage performance is improved and wet grip performance is improved.

In FIG. 4, a linear widening circumferential groove 6 is formed on each of the two land parts 3 adjacent to a circumferential main groove 2 passing through the tire center line. The widening circumferential groove may extend, for example, linearly in the circumferential direction, or in a wavy, sinusoidal, or zigzag shape. Moreover, although a land part on which a widening circumferential groove is formed is not particularly limited, a widening circumferential groove is preferably formed on a land part located on the tire center line, or in a case where a circumferential main groove is present on the tire center line, a widening circumferential groove is preferably formed on a land part nearest to the tire center line, like the widening circumferential groove 6 of FIG. 4.

FIG. 5 is a view showing a cross section of the widening circumferential groove 6. Although the groove width of the widening circumferential groove increases uniformly toward the inner side in the tire radial direction in FIG. 5, an increase in the groove width is not limited to such an aspect, and for example, the groove width may increase while repeating an imperceptible curve-shaped or stepwise increase or decrease.

<Small opening>

In the tire of the present invention, the tread surface on the shoulder region preferably comprises one or more small opening whose opening area is larger than 0.1 $mm^2$ and smaller than 15 $mm^2$. In FIG. 6, small openings 7 are formed on each of a pair of land parts 3 present on the shoulder region of the tread surface. The small openings contribute to improvement in drainage performance, so that drainage performance of the shoulder region is improved, and thus they contribute to improvement of wet grip performance. For example, also in a case where a shoulder land part on one side or the center land part abrades preferentially in actual use and the other shoulder land part hardens over time, the small openings secure drainage performance, and it is considered that wet grip performance after abrasion can be easily improved. The opening area of each of the small openings on the tread surface is preferably larger than 0.1 $mm^2$, more preferably larger than 0.5 $mm^2$, further preferably larger than 1.0 $mm^2$, particularly preferably larger than 1.5 $mm^2$. Moreover, the opening area of each of the small openings on the tread surface is preferably smaller than 15 $mm^2$, more preferably smaller than 10 $mm^2$, further preferably smaller than 7.0 $mm^2$, particularly preferably smaller than 5.0 $mm^2$. A depth of the deepest part of each of the small openings is preferably 3% or more, more preferably 5% or more of a depth of

the deepest part of the circumferential main grooves. Moreover, the depth of the deepest part of the of the small openings is preferably 80% or less, more preferably 60% or less, further preferably 40% or less of the depth of the deepest part of the circumferential main groove.

<Circumferential narrow groove>

In the tire of the present invention, the tread surface of the shoulder regions preferably comprises at least one or more circumferential narrow grooves. In FIG. 7, a circumferential narrow groove 8 is formed on each of a pair of the land parts 3 present on the shoulder regions of the tread surface. Since the circumferential narrow groove contributes to improvement in drainage performance, drainage performance of the shoulder regions is improved, and the circumferential narrow groove contributes to improvement in wet grip performance.

[Rubber composition]

The rubber compositions according to the tire of the present invention, that is, a first rubber composition constituting the first rubber layer of the tread part and a second rubber composition constituting the second rubber layer of the tread part will be described below. Unless otherwise noted, the following explanation can be applied to both the first rubber composition and the second rubber composition. Therefore, when the term "rubber composition" is simply used, the term is intended to mean both the first rubber composition and the second rubber composition.

The rubber compositions according to the present invention, that is, the first rubber composition and the second rubber composition each comprise a rubber component and silica.

<Rubber component>

The rubber compositions according to the present invention, that is, the first rubber composition and the second rubber composition, each comprise an isoprene-based rubber as a rubber component. Moreover, at least one rubber component of a rubber component of the first rubber composition and a rubber component of the second rubber composition preferably comprises at least one of a butadiene rubber and an isoprene-based rubber. Moreover, at least one rubber component of the rubber component of the first rubber composition and the rubber component of the second rubber composition preferably comprises a butadiene rubber. Moreover, at least one rubber component of the rubber component of the first rubber composition and the rubber component of the second rubber composition preferably comprises a butadiene rubber and an isoprene-based rubber. Moreover, these rubber components can also be used in combination with a different rubber component described later, and these rubber components can be subjected to modification aimed at obtaining interaction with a filler or to hydrogenation of a part of double-bond parts from the viewpoint of suppression of deterioration. In addition, each of these rubber compositions can be made into an extended rubber component extended with a plasticizing agent described later, and so on.

(SBR)

The SBR is not particularly limited, examples of which include a solution-polymerized SBR (S-SBR), an emulsion-polymerized SBR (E-SBR), modified SBRs thereof (a modified S-SBR, a modified E-SBR), and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used. These SBRs may be used alone, or two or more thereof may be used in combination.

Examples of the S-SBR that can be used in the present invention include S-SBRs manufactured and sold by JSR Corporation, Sumitomo Chemical Co., Ltd., Ube Industries, Ltd., Asahi Kasei Corporation, ZS Elastomer Co., Ltd, etc.

A styrene content of the SBR is preferably greater than 10% by mass, more preferably greater than 15% by mass, further preferably greater than 20% by mass, from the viewpoints of wet grip performance and abrasion resistance. Moreover, it is preferably less than 60% by mass, more preferably less than 55% by mass, further preferably less than 50% by mass, from the viewpoints of temperature dependency of grip performance and blow resistance. Besides, in the present specification, the styrene content of the SBR is calculated by $^{1}$H-NMR measurement.

A vinyl content of the SBR is preferably greater than 10 mol%, more preferably greater than 13 mol%, further preferably greater than 15 mol%, from the viewpoints of ensuring reactivity with silica, wet grip performance, rubber strength, and abrasion resistance. Moreover, the vinyl content of the SBR is preferably less than 70 mol%, more preferably less than 65 mol%, further preferably less than 60 mol%, from the viewpoints of prevention of increase in temperature dependency, elongation at break, and abrasion resistance. Besides, in the present specification, the vinyl content of the SBR (1,2-bond butadiene unit amount) is measured by an infrared absorption spectrometry.

A weight-average molecular weight (Mw) of the SBR is preferably greater than 200,000, more preferably greater than 250,000, further preferably greater than 300,000, from the viewpoint of wet grip performance. Moreover, the weight-average molecular weight is preferably less than 2,000,000, more preferably less than 1,800,000, further preferably less than 1,500,000, from the viewpoint of cross-linking uniformity. Besides, in the present specification, the weight-average molecular weight of the SBR can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation).
A content of the SBR in the rubber component is greater than 45% by mass, more preferably greater than 50% by mass, further preferably greater than 55% by mass, further preferably 60% by mass or more, from the viewpoint of wet grip performance. On the other hand, an upper limit value of the content of the SBR in the rubber component is not particularly limited.

(BR)

The BR is not particularly limited, and those common in the tire industry can be used, such as, for example, a BR having a cis content less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), a modified BR (a high cis modified BR, a low cis modified BR), and the like. Example of the modified BR include a BR modified with the same functional group, etc. as described for the above-described SBR. These BRs may be used alone, or two or more thereof may be used in combination.
As the high cis BR, for example, those commercially available form Zeon Corporation, Ube Industries, Ltd., JSR Corporation, etc. can be used. When the rubber composition comprises a high cis BR, a low temperature property and abrasion resistance can be improved. The cis content is preferably greater than 95 mol%, more preferably greater than 96 mol%, further preferably 97 mol% or more. Besides, in the present specification, the cis content (cis-1,4-bond butadiene unit amount) is a value calculated by an infrared absorption spectrometry.
The rare-earth-based BR is synthesized using a rare-earth element-based catalyst, a vinyl content of the rare-earth-based BR is preferably less than 1.8 mol%, more preferably less than 1.6 mol%, further preferably 1.5 mol% or less, and a cis content of the rare-earth-based BR is preferably greater than 95 mol%, more preferably greater than 96 mol%, further preferably 97 mol% or more. As the rare-earth-based BR, for example, those commercially available from LANXESS, etc. can be used.
Examples of the SPB-containing BR include those in which 1,2-syndiotactic polybutadiene crystal is chemically bonded with BR and dispersed, but not those in which the crystal is simply dispersed in the BR. As such a SPB-containing BR, those commercially available from Ube Industries, Ltd., etc. can be used.
As the modified BR, a modified butadiene rubber (modified BR) is appropriately used whose terminal and/or main chain are modified with a functional group including at least one element selected from the group consisting of silicon, nitrogen, and oxygen.
Examples of other modified BRs include those obtained by adding a tin compound after polymerizing 1,3-butadiene by a lithium initiator, the terminal of the modified BR molecule being further bonded by tin-carbon bond (tin-modified BRs), and the like. Moreover, the modified BR may be either non-hydrogenated or hydrogenated.
The above-described BRs may be used alone, or two or more thereof may be used in combination.
A weight-average molecular weight (Mw) of the BR is preferably greater than 300,000, more preferably greater than 350,000, further preferably greater than 400,000, from the viewpoint of abrasion resistance. Moreover, it is preferably less than 2,000,000, more preferably less than 1,000,000, further preferably less than 500,000, from the viewpoints of cross-linking uniformity, etc. Besides, the Mw can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation).
A content of the BR when compounded in the rubber component is preferably less than 50% by mass, more preferably less than 45% by mass, further preferably 40% by mass or less, from the viewpoint of wet grip performance. On the other hand, a lower limit value of the content of the BR in the rubber component is not particularly limited and may be 0% by mass or can also be, for example, greater than 1% by mass, greater than 5% by mass, greater than 10% by mass, or 15% by mass or more.

(Isoprene-based rubber)

As an isoprene-based rubber, for example, those common in the tire industry can be used, such as an isoprene rubber (IR), a natural rubber, and the like. Examples of the natural rubber include not only a non-modified natural rubber

(NR) but also a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber when compounded in the rubber component is preferably less than 50% by mass, more preferably less than 40% by mass, further preferably less than 30% by mass, from the viewpoint of wet grip performance. On the other hand, a lower limit value of the content of the isoprene-based rubber in the rubber component is not particularly limited and may be 0% by mass or can also be, for example, greater than 1% by mass, greater than 5% by mass, greater than 10% by mass, greater than 20% by mass, or 25% by mass or more.

(Other rubber components)

As the rubber component of the present invention, the rubber composition may comprise a rubber component other than the above-described isoprene-based rubber, SBR, and BR. As another rubber component, a crosslinkable rubber component commonly used in the tire industry can be used, examples of which include, for example, a styrene-isoprene-butadiene copolymer rubber (SIBR), a styrene-isoprene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

<Filler>

The rubber composition according to the present invention can comprise a filler comprising carbon black and/or silica. The filler preferably comprises silica, more preferably comprises carbon black and silica. The filler may consist of carbon black and silica.

(Carbon black)

As carbon black, those common in the tire industry can be appropriately used, examples of which include, for example, GPF, FEF, HAF, ISAF, SAF, and the like. Moreover, from the viewpoint of a life cycle assessment, in addition to above-described carbon black, carbon black made from lignin or recovered carbon black obtained from a product such as a tire containing carbon black by pyrolysis or the like may be used. These carbon black may be used alone, or two or more thereof may be used in combination.

A nitrogen adsorption specific surface area ($N_2SA$) of the carbon black is preferably greater than 10 $m^2/g$, more preferably greater than 30 $m^2/g$, further preferably greater than 50 $m^2/g$, from the viewpoint of reinforcing property. Moreover, it is preferably less than 200 $m^2/g$, more preferably less than 175 $m^2/g$, further preferably less than 150 $m^2/g$, from the viewpoints of fuel efficiency and processability. Besides, the $N_2SA$ of the carbon black is a value measured according to JIS K 6217-2:2007 "Carbon black for rubber industry-Fundamental characteristics- Part 2: Determination of specific surface area-Nitrogen adsorption methods-Single-point procedures".

The average primary particle size of the carbon black is preferably greater than 10 nm, more preferably greater than 12 nm, further preferably greater than 14 nm. Moreover, the average primary particle size is preferably less than 26 nm, more preferably less than 24 nm, further preferably 22 nm or less. Besides, the average primary particle size of the carbon black is measured by the above-described measuring method.

A content of the carbon black when compounded based on 100 parts by mass of the rubber component is preferably greater than 1 parts by mass, more preferably greater than 3 parts by mass, further preferably 5 parts by mass or more, from the viewpoints of abrasion resistance and wet grip performance. Moreover, it is preferably less than 50 parts by mass, more preferably less than 40 parts by mass, further preferably 30 parts by mass or less, from the viewpoint of fuel efficiency.

(Silica)

Silica is not particularly limited, and for example, those common in the tire industry can be used, such as silica prepared by a dry process (anhydrous silica), silica prepared by a wet process (hydrous silica), and the like. Moreover, from the viewpoint of environmental load, silica made from a biomass material (for example, an amorphous silica purified from rice husk) may be used. Among them, hydrous silica prepared by a wet process is preferable from the reason that it has many silanol groups. The silica may be used alone, or two or more thereof may be used in combination.

The silica made from a biomass material can be obtained by, for example, extracting silicate from rice husk ashes obtained by burning rice husks, using a sodium hydroxide solution, and in the same manner as for a conventional wet silica, by filtering, washing with water, drying, and pulverizing precipitates of silicon dioxide generated by reacting with sulfuric acid, using the silicate. When silica crystallizes, it is insoluble in water, and silicic acid that is a component thereof cannot be used. By controlling a burning temperature and a burning time, crystallization of silica in rice husk ashes can be suppressed (see JP 2009-002594 A, Akita Prefectural University Web Journal B/2019, vol.6, p.216-222, etc.) As the amorphous silica extracted from rice husks, those commercially available from Wilmar International Ltd., etc. can be used.

A nitrogen adsorption specific surface area ($N_2SA$) of the silica is preferably greater than 140 $m^2/g$, more preferably greater than 150 $m^2/g$, further preferably greater than 160 $m^2/g$, further preferably 175 $m^2/g$ or more, from the viewpoints of fuel efficiency and abrasion resistance. Moreover, it is preferably less than 350 $m^2/g$, more preferably less than 300 $m^2/g$, further preferably less than 250 $m^2/g$, from the viewpoints of fuel efficiency and processability. Besides, the $N_2SA$ of the silica in the present specification is a value measured by the BET method according to ASTM D3037-93.

An average primary particle size of the silica is preferably greater than 10 nm, more preferably greater than 12 nm, further preferably greater than 14 nm. Moreover, the average primary particle size is preferably less than 26 nm, more preferably less than 24 nm, further preferably 22 nm or less. Besides, the average primary particle size of the silica is measured by the above-described measuring method.

A content of the silica when compounded based on 100 parts by mass of the rubber component is preferably greater than 20 parts by mass, more preferably greater than 30 parts by mass, further preferably greater than 40 parts by mass, further preferably 50 parts by mass or more, from the viewpoint of wet grip performance. Moreover, it is preferably less than 130 parts by mass, more preferably less than 120 parts by mass, further preferably less than 110 parts by mass, from the viewpoint of abrasion resistance.

A total content of the silica and the carbon black when both compounded based on 100 parts by mass of the rubber component is preferably greater than 40 parts by mass, more preferably greater than 50 parts by mass, further preferably greater than 60 parts by mass, from the viewpoint of abrasion resistance. Moreover, it is preferably less than 160 parts by mass, more preferably less than 140 parts by mass, further preferably less than 120 parts by mass, from the viewpoints of fuel efficiency and elongation at break.

In a case where the rubber composition comprises both the silica and carbon black, the content of the silica is preferably greater than the content of the carbon black from the viewpoint of a balance of fuel efficiency, wet grip performance, and abrasion resistance. A ratio of the silica to the total content of the silica and the carbon black is preferably greater than 60% by mass, more preferably greater than 70% by mass, further preferably greater than 80% by mass, further preferably greater than 90% by mass.

(Other fillers)

As a filler, in addition to the carbon black and silica, other fillers may be further used. Such fillers are not particularly limited, and any fillers conventionally and commonly used in the tire industry can be used, such as, for example, aluminum hydroxide, alumina (aluminum oxide), calcium carbonate, magnesium sulfate, talc, clay, biochar, and the like. These fillers may be used alone, or two or more thereof may be used in combination.

(Silane coupling agent)

The silica is preferably used in combination with a silane coupling agent. The silane coupling agent is not particularly limited, and any silane coupling agents conventionally used in combination with silica in the tire industry can be used, examples of which include, for example, a thioester-based silane coupling agent such as 3-octanoylthio-1-propyltriethoxysilane, 3-hexanoylthio-1-propyltriethoxysilane, 3-octanoylthio-1-propyltrimethoxysilane, and the like; a mercapto-based silane coupling agent such as those represented by the following chemical formulas, and the like; a sulfide-based silane coupling agent such as bis(3-triethoxysilylpropyl)disulfide, bis(3-triethoxysilylpropyl)tetrasulfide, and the like; a vinyl-based silane coupling agent such as vinyltriethoxysilane, vinyltrimethoxysilane, and the like; an amino-based silane coupling agent such as 3-aminopropyltriethoxysilane, 3-aminopropyltrimethoxysilane, 3-(2-aminoethyl)aminopropyltriethoxysilane, and the like; a glycidoxy-based silane coupling agent such as γ-glycidoxypropyltriethoxysilane, γ-glycidoxypropyltrimethoxysilane, and the like; a nitro-based silane coupling agent such as 3-nitropropyltrimethoxysilane, 3-nitropropyltriethoxysilane, and the like; a chloro-based silane coupling agent such as 3-chloropropyltrimethoxysilane, 3-chloropropyltriethoxysilane, and the like; and the like. Among them, the thioester-based silane coupling agent and/or the sulfide-based silane coupling agent are preferable. These silane coupling agents may be used alone, or two or more thereof may be used in combination.

The mercapto-based silane coupling agent is preferably a compound represented by the following chemical formula (1) and/or a compound comprising a bond unit A represented by the following chemical formula (2) and a bond unit B represented by the following chemical formula (3).

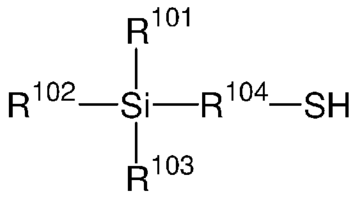

(1)

(wherein, $R^{101}$, $R^{102}$, and $R^{103}$ each independently represents an alkyl having 1 to 12 carbon atoms, alkoxy having 1 to 12 carbon atoms, or a group represented by $-O-(R^{111}-O)_z-R^{112}$ (z pieces of $R^{111}$ each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms.)

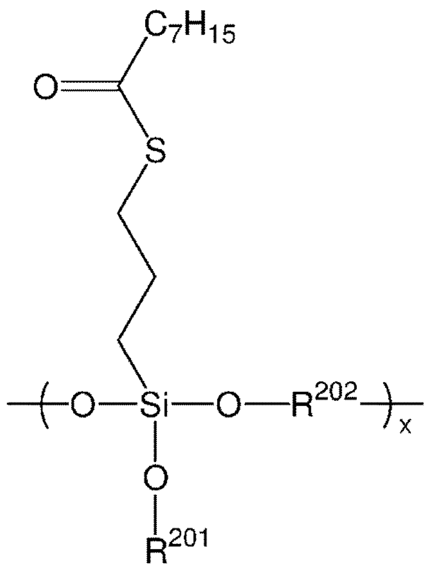

(2)

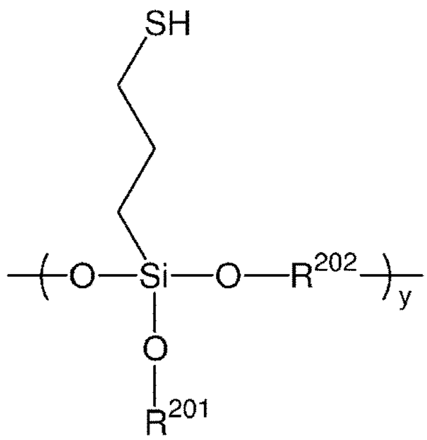

(3)

(wherein, x represents an integer of 0 or more; y represents an integer of 1 or more; $R^{201}$ represents an alkyl having 1 to 30 carbon atoms, an alkenyl having 2 to 30 carbon atoms or an alkynyl having 2 to 30 carbon atoms optionally substituted with a hydrogen atom, a halogen atom, hydroxyl or carboxyl; and $R^{202}$ represents an alkylene having 1 to 30 carbon atoms, an alkenylene having 2 to 30 carbon atoms, or an alkynylene having 2 to 30 carbon atoms; where $R^{201}$ and $R^{202}$ may together form a ring structure.)

Examples of the compound represented by the chemical formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following chemical formula (4) (Si363 manufactured by Evonik Degussa GmbH), etc., and the compound represented by the following chemical formula (4) can be appropriately used. They may be used alone, or two or more thereof may be used in combination.

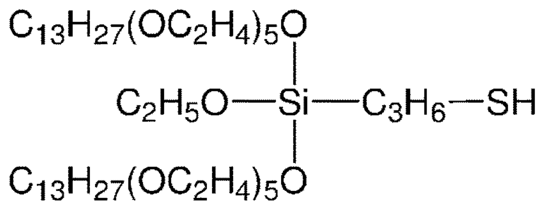

(4)

Examples of the compound comprising the bond unit A represented by the chemical formula (2) and the bond unit B represented by the chemical formula (3) include, for example, those manufactured and sold by Momentive Performance Materials, etc. They may be used alone, or two or more thereof may be used in combination.

A content of the silane coupling agent when compounded based on 100 parts by mass of the rubber component (a total amount of all of a plurality of silane coupling agents when used in combination) is preferably greater than 0.5 parts by mass, more preferably greater than 1.0 parts by mass, further preferably greater than 2.0 parts by mass, further preferably greater than 4.0 parts by mass, from the viewpoint of improvement in dispersibility of silica. Moreover, it is preferably less than 20 parts by mass, more preferably less than 12 parts by mass, further preferably less than 10 parts by mass, further preferably less than 9.0 parts by mass, from the viewpoint of preventing deterioration of abrasion resistance.

A content of the silane coupling agent based on 100 parts by mass of the silica is preferably greater than 1.0 parts by mass, more preferably greater than 3.0 parts by mass, further preferably greater than 5.0 parts by mass, from the viewpoint of improvement in dispersibility of silica. Moreover, it is preferably less than 20 parts by mass, more preferably less than 15 parts by mass, further preferably less than 12 parts by mass, from the viewpoints of cost and processability.

<Plasticizing agent>

The rubber composition according to the present invention preferably comprises a plasticizing agent. Examples of the plasticizing agent include, for example, a resin, oil, a liquid rubber, an ester-based plasticizing agent, and the like.

(Resin)

Examples of the resin include, but not particularly limited to, a petroleum resin, a terpene-based resin, a rosin-based resin, a phenol-based resin, and the like which are commonly used in the tire industry. These resins may be used alone, or two or more thereof may be used in combination.

<<Petroleum resin>>

As the petroleum resin, a C5-based petroleum resin, an aromatic petroleum resin, a C5-C9-based petroleum resin, and the like can be used. These resins may be used alone, or two or more thereof may be used in combination.

The C5-based petroleum resin means a resin obtained by polymerizing C5 fractions. Examples of C5 fractions include, for example, petroleum fractions having 4 to 5 carbon atoms, such as cyclopentadiene, pentene, pentadiene, isoprene, and the like. A dicyclopentadiene resin (DCPD resin) is appropriately used as a C5-based petroleum resin.

The aromatic petroleum resin means a resin obtained by polymerizing C9 fractions and may be those undergoing hydrogeneration or modification. Examples of C9 fractions include, for example, petroleum fractions having 8 to 10 carbon atoms, such as vinyltoluene, alkylstyrene, indene, methylindene, and the like. As specific example of the aromatic petroleum resin, for example, a coumarone-indene resin, a coumarone resin, an indene resin, and an aromatic vinyl-based resin are appropriately used.

As the aromatic vinyl-based resin, a homopolymer of α-methylstyrene or styrene or a copolymer of α-methylstyrene and styrene is preferable, and the copolymer of α-methylstyrene and styrene is more preferable, because it is economical, easy to process, and excellent in heat generation. As the aromatic vinyl-based resin, for example, those commercially available from Kraton Corporation, Eastman Chemical Company, etc. can be used.

The C5-C9-based petroleum resin means a resin obtained by polymerizing the C5 fractions and the C9 fractions and may be those undergoing hydrogeneration or modification. Examples of C5 fractions and C9 fractions include the above-described petroleum fractions. As the C5-C9-based petroleum resin, for example, those commercially available from Tosoh Corporation, Zibo Luhua Hongjin New Material Co., Ltd., etc. can be used.

<<Terpene-based resin>>

Examples of the terpene-based resin include a polyterpene resin consisting of at least one selected from terpene compounds such as α-pinene, β-pinene, limonene, dipentene, and the like; an aromatic modified terpene resin made from

a terpene compound described above and an aromatic compound; a terpene phenol resin made from a terpene compound and a phenol-based compound; and a resin obtained by hydrogenating these types of terpene-based resin (hydrogenated terpene-based resin). Examples of the aromatic compound from which the aromatic modified terpene resin is made include, for example, styrene, $\alpha$-methylstyrene, vinyltoluene, divinyltoluene, and the like. Examples of the phenol-based compound from which the terpene phenol resin is made include, for example, phenol, bisphenol A, cresol, xylenol, and the like. These resins may be used alone, or two or more thereof may be used in combination.

<<Rosin-based resin>>

Examples of the rosin-based resin include, but not particularly limited to, for example, a natural resin rosin, and a rosin-modified resin obtained by modifying it by hydrogenation, disproportionation, dimerization, esterification, or the like. These resins may be used alone, or two or more thereof may be used in combination.

<<Phenol-based resin>>

Examples of the phenol-based resin include, but not particularly limited to, a phenol formaldehyde resin, an alkylphenol formaldehyde resin, an alkyl phenol acetylene resin, an oil-modified phenol formaldehyde resin, and the like. These resins may be used alone, or two or more thereof may be used in combination.

<<Softening point>>

A softening point of the resin is preferably higher than 60°C, more preferably higher than 70°C, further preferably higher than 80°C, from the viewpoint of wet grip performance. Moreover, it is preferably lower than 150°C, more preferably lower than 140°C, further preferably lower than 130°C, from the viewpoints of processability and improvement in dispersibility of the rubber component with the filler. Besides, in the present specification, a softening point specified in JIS K 6220-1: 2001 is measured with a ring and ball softening point measuring device, and the softening point can be defined as a temperature at which a sphere drops.

<<Content>>

A content of the resin component when compounded based on 100 parts by mass of the rubber component is preferably greater than 1 parts by mass, more preferably greater than 3 parts by mass, further preferably greater than 5 parts by mass, from the viewpoint of wet grip performance. Moreover, it is preferably less than 60 parts by mass, more preferably less than 40 parts by mass, further preferably less than 30 parts by mass, further preferably less than 20 parts by mass, from the viewpoint of suppressing heat generation.

(Oil)

Examples of oil include, for example, process oils, vegetable oils and fats, animal oils and fats, and the like. Examples of the process oils include paraffinic process oils, naphthenic process oils, aromatic process oils, and the like. Moreover, as an environmental measure, process oils each having a low content of a polycyclic aromatic compound (PCA) can also be used. Examples of the process oils each having a low content of a PCA include mild extraction solvates (MES), treated distillate aromatic extracts (TDAE), heavy naphthenic oil, and the like.

A content of oil when compounded based on 100 parts by mass of the rubber component is preferably greater than 5 parts by mass, more preferably greater than 10 parts by mass, further preferably greater than 15 parts by mass, from the viewpoint of processability. Moreover, it is preferably less than 120 parts by mass, more preferably less than 80 parts by mass, further preferably less than 40 parts by mass, from the viewpoint of abrasion resistance. Besides, in the present specification, the content of oil also includes an amount of oil contained in an oil-extended rubber.

(Liquid rubber)

The liquid rubber is not particularly limited as long as it is a polymer in a liquid state at normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. These liquid rubbers may be used alone, or two or more thereof may be used in combination.

A content of the liquid rubber when compounded based on 100 parts by mass of the rubber component is preferably greater than 1 parts by mass, more preferably greater than 2 parts by mass, further preferably greater than 3 parts by mass, further preferably greater than 5 parts by mass. Moreover, the content of the liquid rubber is preferably less

than 50 parts by mass, more preferably less than 40 parts by mass, further preferably less than 20 parts by mass.

(Ester-based plasticizing agent)

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

A content of the plasticizing agent based on 100 parts by mass of the rubber component is preferably greater than 5 parts by mass, more preferably greater than 10 parts by mass, further preferably greater than 15 parts by mass, from the viewpoint of wet grip performance. Moreover, the content of the liquid rubber is preferably less than 120 parts by mass, more preferably less than 80 parts by mass, further preferably less than 40 parts by mass, from the viewpoint of processability.

<Other compounding agents>

The rubber composition according to the present invention can appropriately comprise compounding agents conventionally and commonly used in the tire industry, such as, for example, wax, processing aid, an antioxidant, stearic acid, zinc oxide, a vulcanizing agent, a vulcanization accelerator, and the like, in addition to the above-described components.

(Wax)

A content of wax when compounded based on 100 parts by mass of the rubber component is preferably greater than 0.5 parts by mass, more preferably greater than 1.0 part by mass, further preferably greater than 1.5 parts by mass, from the viewpoint of weather resistance of a rubber. Moreover, it is preferably less than 10 parts by mass, more preferably less than 7.0 parts by mass, further preferably less than 5.0 parts by mass, from the viewpoint of prevention of whitening of a tire due to bloom.

(Processing aid)

Examples of processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. The processing aid may be used alone, or two or more thereof may be used in combination. As processing aid, for example, those commercially available from Schill+Seilacher GmbH, Performance Additives, etc. can be used.

A content of the processing aid when compounded based on 100 parts by mass of the rubber component is preferably greater than 0.5 parts by mass, more preferably greater than 1 parts by mass, further preferably greater than 15 parts by mass, from the viewpoint of exhibiting an effect of improving processability. Moreover, it is preferably less than 10 parts by mass, more preferably less than 8.0 parts by mass, further preferably less than 5.0 parts by mass, from the viewpoints of abrasion resistance and breaking strength.

(Antioxidant)

Examples of the antioxidant include, but not particularly limited to, for example, amine-based, quinoline-based, quinone-based, phenol-based, and imidazole-based compounds, and antioxidants such as a carbamic acid metal salt and the like, and a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like; and a quinoline-based antioxidant such as 2,2,4-trimethyl-1,2-dihydroquinoline polymer, 6-ethoxy-2,2,4-trimethyl-1,2-dihydroquinoline, and the like are preferable. These antioxidants may be used alone, or two or more thereof may be used in combination.

A content of the antioxidant when compounded based on 100 parts by mass of the rubber component is preferably greater than 0.5 parts by mass, more preferably greater than 1.0 parts by mass, further preferably greater than 1.5 parts by mass, from the viewpoint of ozone crack resistance of a rubber. Moreover, it is preferably less than 10 parts by mass, more preferably less than 7 parts by mass, further preferably less than 5 parts by mass, from the viewpoints of abrasion resistance and wet grip performance.

(Stearic acid)

A content of the stearic acid when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of vulcanization rate.

(Zinc oxide)

A content of the zinc oxide when compounded based on 100 parts by mass of the rubber component is preferably greater than 0.5 parts by mass, more preferably greater than 1.0 parts by mass, further preferably greater than 1.5 parts by mass, from the viewpoint of processability. Moreover, it is preferably less than 10 parts by mass, more preferably less than 7 parts by mass, further preferably less than 5 parts by mass, from the viewpoint of abrasion resistance.

(Vulcanizing agent)

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of the sulfur when compounded as the vulcanizing agent based on 100 parts by mass of the rubber component is preferably greater than 0.1 parts by mass, more preferably greater than 0.3 parts by mass, further preferably greater than 0.5 parts by mass, from the viewpoint of securing a sufficient vulcanization reaction. Moreover, it is preferably less than 5.0 parts by mass, more preferably less than 4.0 parts by mass, further preferably 3.0 parts by mass or less, from the viewpoint of prevention of deterioration. Besides, a content of the vulcanizing agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

(Vulcanization accelerator)

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, xanthate-based vulcanization accelerators, and the like. These vulcanization accelerators may be used alone, or two or more thereof may be used in combination.

Among them, the rubber composition preferably comprises one or more vulcanization accelerators selected from the group consisting of sulfenamide-based, guanidine-based, and thiazole-based vulcanization accelerators, and the rubber composition more preferably consists of a sulfenamide-based vulcanization accelerator and a guanidine-based vulcanization accelerator.

Examples of the sulfenamide-based vulcanization accelerator include, for example, N-tert-butyl-2-benzothiazolyl sulfenamide (TBBS), **N-**cyclohexyl-2-benzothiazolyl sulfenamide (CBS), N,N-dicyclohexyl-2-benzothiazolyl sulfenamide (DCBS), and the like. Among them, N-cyclohexyl-2-benzothiazolyl sulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably greater than 1 parts by mass, more preferably greater than 1.5 parts by mass, further preferably 2 parts by mass or more. Moreover, the content of the vulcanization accelerator based on 100 parts by mass of the rubber component is preferably less than 8 parts by mass, more preferably less than 7 parts by mass, further preferably less than 6 parts by mass. When the content of the vulcanization accelerator is within the above-described ranges, breaking strength and elongation tend to be secured.

[Production]

The rubber compositions according to the present invention, that is, both the first rubber composition constituting the first rubber layer and the second rubber composition constituting the second rubber layer, can be produced by a known method. For example, they can be produced by kneading the above-described components with a rubber kneading machine such as an open roll, a sealed type kneader (a Banbury mixer, a kneader, and the like), and the like.

A kneading step includes, for example, a base kneading step of kneading compounding agents and additives other than a vulcanizing agent and a vulcanization accelerator, and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of a kneading condition include, but not particularly limited to, for example, a method of kneading at a discharge temperature of 150°C to 170°C for 3 to 10 minutes in the base kneading step and kneading at 70°C to 110°C for 1 to 5 minutes in the final kneading step.

The tire of the present invention can be produced using the first rubber composition and the second rubber composition by a usual method. That is, the tire of the present invention can be produced by extruding unvulcanized first and second rubber compositions into shapes of a first rubber layer and a second rubber layer with an extruder equipped with a mouthpiece having a predetermined shape, attaching them together with other tire members on a tire forming machine, and molding them by a usual method to form an unvulcanized tire, followed by heating and pressurizing this unvulcanized tire in a vulcanizing machine. Examples of a vulcanization condition include, but not particularly limited to, for example, a method of vulcanizing at 150°C to 200°C for 10 to 30 minutes.

[Application]

The tire of the present invention can be used for any application, regardless of whether the tire is a pneumatic tire or a non-pneumatic tire. Moreover, the tire of the present invention can be used as a racing tire, a tire for a passenger car, a tire for a large passenger car, a tire for a large SUV, and a motorcycle tire. Among them, the tire of the present invention is preferably used as a tire for a passenger car. Here, the "tire for a passenger car" refers to a tire that is presupposed to be mounted to a vehicle running with four wheels and that has a maximum load capacity of 1000 kg or less in the JATMA standard.

Moreover, the tire of the present invention can be used as a summer tire, a winter tire, or a studless tire of each of the above-described tires.

EXAMPLES

The present invention will be described based on Examples, though the present invention is not limited to only these Examples. Examples 3 and 5 of table 2 below are not according to the present invention.

Various chemicals used in Examples and Comparative examples are collectively shown below.

SBR 1: Styrene-butadiene rubber synthesized in the following Production example 1 (modified S-SBR, styrene content: 25% by mass, vinyl content: 25 mol%, Tg: -55°C)

SBR 2: HPR850 manufactured by JSR Corporation (styrene content: 27.5% by mass, vinyl content: 59 mol%, Tg: -24°C)

SBR 3: Styrene-butadiene rubber synthesized in the following Production example 2 (modified S-SBR, styrene content: 33% by mass, vinyl content: 46 mol%, Tg: -22°C)

SBR 4: Styrene-butadiene rubber synthesized in the following Production example 3 (S-SBR, styrene content: 38% by mass, vinyl content: 20 mol%, Tg: -37°C)

BR: Ubepol BR (Registered Trademark) 150B manufactured by Ube Industries, Ltd. (vinyl content: 15 mol%, cis content: 97 mol%, Mw: 440,000)

NR: TSR 20

CB (Carbon black) 1: SHOW BLACK N134 manufactured by Cabot Japan K.K., ($N_2SA$: 148 $m^2/g$, average primary particle size: 18 nm)

CB (Carbon black) 2: N220 manufactured by BIRLA CARBON BRASIL LTDA. ($N_2SA$: 115 $m^2/g$, average primary particle size: 22 nm)

Silica: Ultrasil (Registered Trademark) VN3 manufactured by Evonik Degussa GmbH ($N_2SA$: 175 $m^2/g$, average primary particle size: 18 nm)

Coupling agent (silane coupling agent) 1: Si266 manufactured by Evonik Degussa GmbH (bis(3-triethoxysilylpropyl) disulfide)

Coupling agent (silane coupling agent) 2: NXT manufactured by Momentive Performance Materials (3-octanoylthio-propyltriethoxysilane)
Oil: VivaTec 500 manufactured by H&R Group (TDAE oil)
Resin 1: Sylvatraxx SA85 manufactured by Kraton Corporation (copolymer of $\alpha$-methylstyrene and styrene, softening point: 85°C)
Resin 2: NOVARES C90 manufactured by RÜTGERS Chemicals GmbH (coumarone-indene resin, softening point: 90°C)
Antioxidant 1: Antigen 6C manufactured by Sumitomo Chemical Co., Ltd. (6PPD, N-(1,3-dimethylbutyl)-N'-phenyl-p-phenylenediamine)
Antioxidant 2: Nocrac 224 manufactured by Ouchi Shinko Chemical Industry Co., Ltd. (TMQ, 2,2,4-trimethyl-1,2-dihydroquinoline polymer)
Stearic acid: Bead stearic acid "CAMELLIA" manufactured by NOF CORPORATION
Zinc oxide: Zinc oxide No. 2 manufactured by Mitsui Mining & Smelting Co., Ltd.
Sulfur: Powdered sulfur manufactured by Karuizawa Sulfur Co, Ltd.
Vulcanization accelerator 1: Nocceler CZ manufactured by Ouchi Shinko Chemical Industry Co., Ltd. (CBS, N-cyclohexyl-2-benzothiazolylsulfenamide)
Vulcanization accelerator 2: Nocceler D manufactured by Ouchi Shinko Chemical Industry Co., Ltd. (DPG, 1,3-diphenylguanidine (DPG))

Production example 1: Synthesis of SBR 1

A ratio of styrene and 1,3-butadiene to each other is adjusted so that a styrene content is 25% by mass in a substance to be obtained. In an autoclave reactor subjected to nitrogen purge, cyclohexane, tetrahydrofuran, styrene, and 1,3-butadiene are charged. After adjusting temperature of contents in the reactor to 20°C, n-butyllithium is added to initiate polymerization. The polymerization is performed under an adiabatic condition. When a polymerization conversion rate reaches 99%, 1,3-butadiene is added, and after further polymerization, methyltriethoxysilane is added as a modifying agent to perform a modification reaction. After completion of the reaction, 2,6-di-tert-butyl-p-cresol is added. Next, the mixture is subjected to removal of solvent by a steam stripping and dried with a heat roll whose temperature is adjusted to 110°C to obtain a SBR 1.

Production example 2: Synthesis of SBR 3

A ratio of styrene and 1,3-butadiene to each other is adjusted so that a styrene content is 33% by mass in a substance to be obtained. In an autoclave reactor subjected to nitrogen purge, cyclohexane, tetrahydrofuran, styrene, and 1,3-butadiene are charged. After adjusting temperature of contents in the reactor to 20°C, n-butyllithium is added to initiate polymerization. The polymerization is performed under an adiabatic condition. When a polymerization conversion rate reaches 99%, 1,3-butadiene is added, and after further polymerization, 3-[bis-(trimethylsilyl)amino] propyltriethoxysilane is added as a modifying agent to perform a modification reaction. After completion of the reaction, 2,6-di-tert-butyl-p-cresol is added. Next, the mixture is subjected to removal of solvent by a steam stripping and dried with a heat roll whose temperature is adjusted to 110°C to obtain a SBR 3.

Production example 3: Synthesis of SBR 4

A ratio of styrene and 1,3-butadiene to each other is adjusted so that a styrene content is 38% by mass in a substance to be obtained. In an autoclave reactor subjected to nitrogen purge, cyclohexane, tetrahydrofuran, styrene, and 1,3-butadiene are charged. After adjusting temperature of contents in the reactor to 20°C, n-butyllithium is added to initiate polymerization. After the polymerization is performed under an adiabatic condition for a predetermined period of time, a polymerization solution is poured into 4L of ethanol to collect a precipitate. After blow-drying the obtained precipitate, it is dried under reduced pressure at 80°C/10 Pa or less until a drying loss becomes 0.1%, to obtain a SBR 4.

[Example and Comparative example]

According to the compounding formulations shown in Table 1, using a 1.7 L closed Banbury mixer, all chemicals other than sulfur and a vulcanization accelerator are kneaded for 1 to 10 minutes until the temperature reaches a discharge temperature of 150°C to 160°C, to obtain a kneaded product. Next, using a twin-screw open roll, the sulfur and vulcanization accelerator are added to the obtained kneaded product, and the mixture is kneaded for 4 minutes until the temperature reaches 105°C, to obtain an unvulcanized rubber composition. The obtained unvulcanized rubber composition is molded into shapes of a first layer and a second layer of a tread and attached together with other tire members to produce an unvulcanized tire, and the unvulcanized tire is vulcanized at 170°C, thereby obtaining each test tire

listed in Table 2 (size: 205/55R16).

Three linear main grooves are formed as a circumferential main groove on a tread surface of each test tire, one main groove among them passes through the tire center line, and the other two main grooves are formed on outer sides in a tire width direction at positions at which the other two main grooves are at the same distance from the main groove passing through the tire center line. All groove depths (the deepest parts) of these circumferential main grooves are set to 6.5 mm.

<Physical properties of rubber layer>

Each of physical properties of each of rubber layers constituting a tire is measured by the following methods. Results are also described in the corresponding columns of Table 1 regarding a rubber composition constituting each rubber layer.

(0°C tan δ)

A sample for measurement of viscoelasticity having a length of 20 mm, a width of 4 mm, and a thickness of 1 mm is taken from inside of a predetermined rubber layer (a first rubber layer, a second rubber layer) of a tread part of each test tire such that a tire circumferential direction becomes a long side and a tire radial direction becomes a thickness, and a loss tangent tan δ is measured using EPLEXOR series manufactured by gabo Systemtechnik GmbH under a condition of a temperature at 0°C, an initial strain of 10%, a dynamic strain of 2.5%, a frequency of 10 Hz, and an extension mode.

(30°C tan δ)

A sample for measurement of viscoelasticity having a length of 20 mm, a width of 4 mm, and a thickness of 1 mm is taken from inside of a predetermined rubber layer (a first rubber layer) of a tread part of each test tire such that the tire circumferential direction becomes a long side and the tire radial direction becomes a thickness, and a loss tangent tan δ is measured using EPLEXOR series manufactured by gabo Systemtechnik GmbH under a condition of a temperature at 30°C, an initial strain of 5%, a dynamic strain of 1%, a frequency of 10 Hz, and an extension mode.

(Grass transition temperature (Tg) of rubber composition)

Regrading each rubber test piece that has a length of 20 mm, a width of 4 mm, and a thickness of 1 mm and is prepared by being cut out from inside of a predetermined rubber layer (a second rubber layer) of the tread part of each test tire such that the tire circumferential direction becomes a long side and the tire radial direction becomes a thickness, a temperature distribution curve of a loss tangent tan δ is measured using EPLEXOR series manufactured by gabo Systemtechnik GmbH under a condition of a frequency of 10 Hz, an initial strain of 10%, an amplitude of ±0.5%, and a temperature rising rate of 2°C/min, and a temperature (tan δ peak temperature) corresponding to the largest value of tan δ in the obtained temperature distribution curve is determined as a glass transition temperature (Tg). However, in a case where there are two or more temperature points at which the tan δ has the maximum value, the lowest temperature of these temperature points is defined as a glass transition temperature of a rubber composition.

<Wet grip performance after abrasion>

After each test tire (size: 205/55R16) is thermally deteriorated at 80°C for 7 days and is further abraded uniformly along a radius of the tire in mint condition so that each test tire is abraded by 4.5 mm on a tire equatorial line, each test tire is mounted on all wheels of a vehicle (a domestic FF vehicle with a displacement of 2000 cc). The vehicle is made run at a speed of 100 km/h on a wet asphalt road surface, and a braking distance from a point at which the vehicle is braked is measured. Wet grip performance of each tire after abrasion is indicated as an index by the following equation such that a braking distance of a test tire of the reference Comparative example becomes 100. The results show that the larger the index is, the more excellent the wet grip performance is.

(Wet grip performance index after abrasion) = (Braking distance of tire of reference Comparative example after abrasion) / (Braking distance of each test tire after abrasion) × 100.

Table 1

| | Rubber composition | | | | | |
|---|---|---|---|---|---|---|
| | A | B | C | D | E | F |
| Compounding amount (part by mass) | | | | | | |
| SBR 1 | 60 | - | 40 | 30 | 60 | - |
| SBR 2 | - | 60 | 60 | 30 | - | - |
| SBR 3 | - | - | - | - | - | 50 |
| SBR 4 | - | - | - | - | - | 30 |
| BR | 15 | 15 | - | 40 | 40 | 20 |
| NR | 25 | 25 | - | - | - | - |
| CB 1 | - | - | 30 | 10 | 30 | - |
| CB 2 | 5 | 5 | - | - | - | 10 |
| Silica | 80 | 80 | 50 | 70 | 50 | 80 |
| Coupling agent 1 | - | - | - | - | 5 | 8 |
| Coupling agent 2 | 8 | 8 | 5 | 7 | - | - |
| Oil | 5 | 3 | - | - | 7 | 7 |
| Resin 1 | 6 | 6 | - | - | - | - |
| Resin 2 | - | - | 15 | 15 | 15 | - |
| Antioxidant 1 | 2 | 2 | 2 | 2 | 2 | 2 |
| Antioxidant 2 | 1 | 1 | 1 | 1 | 1 | 1 |
| Stearic acid | 2 | 2 | 2 | 2 | 2 | 2 |
| Zinc oxide | 2 | 2 | 2 | 2 | 2 | 2 |
| Sulfur | 1.4 | 1.4 | 1.4 | 1.4 | 1.4 | 1.4 |
| Vulcanization accelerator 1 | 2.3 | 2.3 | 2.3 | 2.3 | 2.3 | 2.3 |
| Vulcanization accelerator 2 | 1.5 | 1.5 | 1.5 | 1.5 | 1.5 | 1.5 |
| Physical properties | | | | | | |
| 0°C tan $\delta$ | 0.33 | 0.56 | 0.87 | 0.46 | 0.37 | 0.58 |
| | Rubber composition | | | | | |
| | A | B | C | D | E | F |
| 30°C tan $\delta$ | 0.17 | 0.19 | 0.23 | 0.21 | 0.22 | 0.32 |
| Tg in °C | -38 | -19 | -17 | -30 | -41 | -18 |
| Styrene content in % by mass | 15.0 | 16.5 | 26.5 | 15.8 | 15.0 | 27.9 |

Table 2 (Tire)

| | Example | | | | | | | |
|---|---|---|---|---|---|---|---|---|
| | 1 | 2 | 3 | 4 | 5 | 6 | 7 | 8 |
| First rubber layer | A | A | B | A | F | A | A | A |
| Second rubber layer | B | F | F | E | C | D | E | D |
| 0°C tan $\delta$1 | 0.33 | 0.33 | 0.56 | 0.33 | 0.58 | 0.33 | 0.33 | 0.33 |
| 0°C tan $\delta$2 | 0.56 | 0.58 | 0.58 | 0.37 | 0.87 | 0.46 | 0.37 | 0.46 |
| $LAND_{Cr}$ | 60 | 60 | 60 | 40 | 60 | 40 | 60 | 40 |
| $LAND_{Sh}$ | 70 | 70 | 70 | 70 | 70 | 70 | 70 | 70 |
| St1 in % by mass | 15.0 | 15.0 | 16.5 | 15.0 | 34.5 | 15.0 | 15.0 | 15.0 |
| St2 in % by mass | 16.5 | 34.5 | 34.5 | 15.0 | 26.5 | 15.8 | 15.0 | 15.8 |
| H1 in mm | 4 | 4 | 4 | 4 | 4 | 4 | 4 | 3 |
| H2 in mm | 6 | 6 | 6 | 6 | 6 | 6 | 6 | 7 |
| Inequality (1) $LAND_{Sh}/LAND_{Cr}$ | 1.17 | 1.17 | 1.17 | 1.75 | 1.17 | 1.75 | 1.17 | 1.75 |

(continued)

| | Example | | | | | | | |
|---|---|---|---|---|---|---|---|---|
| | 1 | 2 | 3 | 4 | 5 | 6 | 7 | 8 |
| Inequality (2) 0°C tan 52/0°C tan 51 | 1.71 | 1.76 | 1.03 | 1.13 | 1.51 | 1.40 | 1.13 | 1.40 |
| Inequality (3) 0°C tan δ2 × ($LAND_{Sh}/LAND_{Cr}$) | 0.97 | 1.02 | 0.60 | 0.42 | 1.32 | 0.64 | 0.42 | 0.64 |
| Inequality (4) 0°C tan δ1 × ($LAND_{Sh}/LAND_{Cr}$) | 0.38 | 0.38 | 0.66 | 0.58 | 0.68 | 0.58 | 0.38 | 0.58 |
| Tg2 in °C | -19 | -18 | -18 | -41 | -17 | -24 | -41 | -24 |
| 30°C tan δ1 | 0.17 | 0.17 | 0.19 | 0.17 | 0.32 | 0.17 | 0.17 | 0.17 |
| At least one of St1 and St2 is less than 25.0 | ○ | ○ | ○ | ○ | × | ○ | ○ | ○ |
| Wet grip performance index after abrasion | 125 | 125 | 140 | 120 | 130 | 150 | 130 | 150 |

| | Comparative example | | | | | | |
|---|---|---|---|---|---|---|---|
| | 1 | 2 | 3 | 4 | 5 | 6 | 7 |
| First rubber layer | A | A | B | B | B | F | B |
| Second rubber layer | D | E | D | D | A | A | D |
| 0°C tan δ1 | 0.33 | 0.33 | 0.56 | 0.56 | 0.56 | 0.58 | 0.56 |
| 0°C tan δ2 | 0.46 | 0.37 | 0.46 | 0.46 | 0.33 | 0.33 | 0.46 |
| $LAND_{Cr}$ | 70 | 80 | 80 | 40 | 60 | 60 | 60 |
| $LAND_{Sh}$ | 60 | 70 | 70 | 80 | 80 | 70 | 70 |
| St1 in % by mass | 15.0 | 15.0 | 16.5 | 16.5 | 16.5 | 34.5 | 16.5 |
| St2 in % by mass | 15.8 | 15.0 | 15.8 | 15.8 | 15.0 | 15.0 | 15.8 |
| H1 in mm | 4 | 4 | 4 | 4 | 4 | 4 | 4 |
| H2 in mm | 6 | 6 | 6 | 6 | 6 | 6 | 6 |
| Inequality (1) $LAND_{Sh}/LAND_{Cr}$ | 0.86 | 0.88 | 0.88 | 2.00 | 1.33 | 1.17 | 1.17 |
| Inequality (2) 0°C tan 52/0°C tan 51 | 1.40 | 1.13 | 0.82 | 0.82 | 0.58 | 0.57 | 0.82 |
| Inequality (3) 0°C tan δ2 × ($LAND_{Sh}/LAND_{Cr}$) | 0.64 | 0.42 | 0.38 | 0.38 | 0.19 | 0.19 | 0.38 |
| Inequality (4) 0°C tan δ1 × ($LAND_{Sh}/LAND_{Cr}$) | 0.28 | 0.29 | 0.49 | 1.13 | 0.75 | 0.68 | 0.66 |
| Tg2 in °C | -24 | -41 | -24 | -24 | -38 | -38 | -24 |
| 30°C tan δ1 | 0.17 | 0.17 | 0.19 | 0.19 | 0.19 | 0.32 | 0.19 |
| At least one of St1 and St2 is less than 25.0 | ○ | ○ | ○ | ○ | ○ | ○ | ○ |
| Wet grip performance index after abrasion | 100 | 90 | 80 | 70 | 60 | 50 | 80 |

In Table 2 described above, "∘" means that a test tire complies with a given condition, and "×" means that a test tire does not comply with the given condition.

**REFERENCE** SIGNS LIST

| | |
|---|---|
| Te | Tread end |
| C | Tire circumferential direction |
| W | Tire width direction |
| CL | Tire center line |
| H1 | Thickness of first rubber layer |
| H2 | Thickness of second rubber layer |
| D | Groove depth |

L Ground-contacting maximum width
Cr Crown region
Sh Shoulder region
1 Tread development view
2 Circumferential main groove
3 Land part
31 Land part
32 Land part
4 First rubber layer
5 Second rubber layer
6 Widening circumferential groove
7 Small opening
8 Circumferential narrow groove

## Claims

**1.** A tire comprising a tread part,

wherein the tread part at least comprises

a first rubber layer (4) located on an outermost side in a tire radial direction, and
a second rubber layer (5) adjacent to an inner side of the first rubber layer (4) in the tire radial direction,

wherein a tread surface of the tread part comprises

two or more circumferential main grooves (2) extending in a tire circumferential direction (C), and
land parts (3) partitioned off by the circumferential main grooves (2),

wherein at least one circumferential main groove (2) among the circumferential main grooves is formed such that the deepest part of its groove bottom is located on an inner side in the tire radial direction with respect to an outermost part of the second rubber layer (5) within a land part (31, 32) adjacent to the at least one circumferential main groove (2),
wherein a ground-contacting region of the tread surface is divided into thirds by two straight lines that trisect a ground-contacting maximum width (L) of the ground-contacting region and that are parallel to the tire circumferential direction (C), a central portion of them is referred to as a crown region (Cr), and each portion on the both sides of the crown region (Cr) is referred to as a shoulder region (Sh),
wherein, when a land ratio of the crown region (Cr) is referred to as $LAND_{Cr}$ and a land ratio of the shoulder region (Sh) is referred to as $LAND_{Sh}$, $LAND_{Cr}$ and $LAND_{Sh}$ satisfy the following inequality,

$$(1)\ LAND_{Sh}/LAND_{Cr} > 1.00,$$

wherein the first rubber layer (4) is composed of a first rubber composition, the first rubber composition comprising a rubber component comprising a styrene-butadiene rubber,
wherein a content of the styrene-butadiene rubber in the rubber component is greater than 45% by mass, and
silica,
wherein the second rubber layer (5) is composed of a second rubber composition, the second rubber composition comprising
a rubber component comprising a styrene-butadiene rubber,
wherein a content of the styrene-butadiene rubber in the rubber component is greater than 45% by mass, and
silica, and
wherein, when a styrene content in % by mass of the rubber component of the first rubber composition is referred to as St1 and a styrene content in % by mass of the rubber component of the second rubber composition is referred to as St2, at least one of St1 and St2 is less than 16.0,
wherein, when a tan δ at 0°C of the first rubber composition is referred to as 0°C tan δ1 and a tan δ at 0°C of the second rubber composition is referred to as 0°C tan δ2, 0°C tan δ1 and 0°C tan δ2 satisfy the following inequality,

$$(2)\ 0^{\circ}C \tan \delta 2 / 0^{\circ}C \tan \delta 1 > 1.00,$$

wherein a "0°C tan δ" is a loss tangent measured under a condition of a temperature at 0°C, an initial strain of 10%, a dynamic strain of 2.5%, a frequency of 10 Hz, and an extension mode.

**2.** The tire of claim 1, wherein 0°C tan δ2, $LAND_{Cr}$, and $LAND_{Sh}$ satisfy the following inequality,

$$(3)\ 0^{\circ}C \tan \delta 2 \times (LAND_{Sh}/LAND_{Cr}) > 0.50.$$

**3.** The tire of claim 1 or 2, wherein 0°C tan δ1, $LAND_{Cr}$, and $LAND_{Sh}$ satisfy the following inequality,

$$(4)\ 0^{\circ}C \tan \delta 1 \times (LAND_{Sh}/LAND_{Cr}) < 3.00.$$

**4.** The tire of any one of claims 1 to 3, wherein the right side of the inequality (1) is 1.15.

**5.** The tire of any one of claims 1 to 4, wherein the right side of the inequality (2) is 1.10.

**6.** The tire of any one of claims 1 to 5, wherein, when a glass transition temperature in °C of the second rubber composition is referred to as Tg2, Tg2 is higher than -30°C.

**7.** The tire of any one of claims 1 to 6, wherein, when a tan δ at 30°C of the first rubber composition is referred to as 30°C tan δ1, 30°C tan δ1 is less than 0.30, wherein a "30°C tan δ" is a loss tangent measured under a condition of a temperature at 30°C, an initial strain of 5%, a dynamic strain of 1%, a frequency of 10 Hz, and an extension mode.

**8.** The tire of any one of claims 1 to 7, wherein a length, in a tire width direction (W), of a land part among the land parts that is located on a tire center line (CL) or of a land part (3) among the land parts that is nearest to the tire center line (CL) in a case where a circumferential main groove (2) is present on the tire center line (CL) increases from the outer side toward the inner side in the tire radial direction.

**9.** The tire of any one of claims 1 to 8, wherein at least one rubber component of the rubber component of the first rubber composition and the rubber component of the second rubber composition comprises at least one of a butadiene rubber and an isoprene-based rubber.

**10.** The tire of any one of claims 1 to 9, wherein the tread surface comprises a widening circumferential groove (6) whose groove width widens on the inner side in the tire radial direction.

**11.** The tire of claim 10, wherein the widening circumferential groove (6) is present on a land part (3) located on the tire center line or on a land part nearest to the tire center part in a case where a circumferential main groove (2) is present on the tire center line (CL).

**12.** The tire of any one of claims 1 to 11, wherein the tread surface of the shoulder region (Sh) comprises one or more small openings whose opening areas are larger than 0.1 $mm^2$ and smaller than 15 $mm^2$.

**13.** The tire of any one of claims 1 to 12, wherein the tread surface of the shoulder region (Sh) comprises at least one or more circumferential narrow grooves (8).

## Patentansprüche

**1.** Reifen, umfassend einen Laufstreifenteil,

wobei der Laufstreifenteil mindestens umfasst:

eine erste Kautschukschicht (4), die sich in einer Reifenradialrichtung auf einer äußersten Seite befindet, und eine zweite Kautschukschicht (5), die zu einer inneren Seite der ersten Kautschukschicht (4) in der Reifenradialrichtung benachbart ist,

wobei eine Laufstreifenoberfläche des Laufstreifenteils umfasst:

zwei oder mehr Umfangshauptrillen (2), die sich in einer Reifenumfangsrichtung (C) erstrecken, und Positivprofilteile (3), die durch die Umfangshauptrillen (2) abgetrennt sind,

wobei mindestens eine Umfangshauptrille (2) von den Umfangshauptrillen so ausgebildet ist, dass der tiefste Teil ihres Rillenbodens sich in der Reifenradialrichtung auf einer inneren Seite in Bezug auf einen äußersten Teil der zweiten Kautschukschicht (5) innerhalb eines zu der mindestens einen Umfangshauptrille (2) benachbarten Positivprofilteils (31, 32) befindet,
wobei ein Bodenkontaktbereich der Laufstreifenoberfläche durch zwei Geraden, die eine maximale Bodenkontaktbreite (L) des Bodenkontaktbereiches dreiteilen und die parallel zur Reifenumfangsrichtung (C) sind, in Drittel unterteilt ist, ein zentraler Abschnitt von ihnen als ein Kronenbereich (Cr) bezeichnet wird, und jeder Abschnitt auf den beiden Seiten des Kronenbereichs (Cr) als ein Schulterbereich (Sh) bezeichnet wird,
wobei, wenn ein Positivprofilanteil des Kronenbereichs (Cr) als $LAND_{Cr}$ bezeichnet wird und ein Positivprofilanteil des Schulterbereichs (Sh) als $LAND_{Sh}$ bezeichnet wird, $LAND_{Cr}$ und $LAND_{Sh}$ der folgenden Ungleichung genügen,

$$(1)\ LAND_{Sh}/LAND_{Cr} > 1{,}00,$$

wobei die erste Kautschukschicht (4) mit einer ersten Kautschukzusammensetzung aufgebaut ist, wobei die erste Kautschukzusammensetzung umfasst:
eine Kautschukkomponente, die einen Styrol-Butadien-Kautschuk umfasst,
wobei ein Gehalt des Styrol-Butadien-Kautschuks in der Kautschuckomponente größer als 45 Massen-% ist, und
Siliziumdioxid,
wobei die zweite Kautschukschicht (5) mit einer zweiten Kautschukzusammensetzung aufgebaut ist, wobei die zweite Kautschukzusammensetzung umfasst:
eine Kautschukkomponente, die einen Styrol-Butadien-Kautschuk umfasst,
wobei ein Gehalt des Styrol-Butadien-Kautschuks in der Kautschukkomponente größer als 45 Massen-% ist, und
Siliziumdioxid, und
wobei, wenn ein Styrolgehalt in Massen-% der Kautschuckomponente der ersten Kautschukzusammensetzung als St1 bezeichnet wird und ein Styrolgehalt in Massen-% der Kautschukkomponente der zweiten Kautschukzusammensetzung als St2 bezeichnet wird, mindestens eines von St1 und St2 kleiner als 16,0 ist,
wobei, wenn ein tan δ bei 0°C der ersten Kautschukzusammensetzung als 0°C tan δ1 bezeichnet wird und ein tan δ bei 0°C der zweiten Kautschukzusammensetzung als 0°C tan δ2 bezeichnet wird, 0°C tan δ1 und 0°C tan δ2 der folgenden Ungleichung genügen,

$$(2)\ 0°C\ \tan\delta 2/0°C\ \tan\delta 1 > 1{,}00,$$

wobei ein "0°C tan δ" ein Verlusttangens ist, der unter Bedingungen einer Temperatur bei 0°C, einer anfänglichen Dehnung von 10%, einer dynamischen Dehnung von 2,5%, einer Frequenz von 10 Hz und eines Streckungsmodus gemessen ist.

2. Reifen nach Anspruch 1, wobei 0°C tan δ2, $LAND_{Cr}$ und $LAND_{Sh}$ der folgenden Ungleichung genügen,

$$(3)\ 0°C\ \tan\delta 2 \times (LAND_{Sh}/LAND_{Cr}) > 0{,}50.$$

3. Reifen nach Anspruch 1 oder 2, wobei 0°C tan δ1, $LAND_{Cr}$ und $LAND_{Sh}$ der folgenden Ungleichung genügen,

$$(4)\ 0°C\ \tan\delta 1 \times (LAND_{Sh}/LAND_{Cr}) < 3{,}00.$$

4. Reifen nach einem der Ansprüche 1 bis 3, wobei die rechte Seite der Ungleichung (1) 1,15 beträgt.

5. Reifen nach einem der Ansprüche 1 bis 4, wobei die rechte Seite der Ungleichung (2) 1,10 beträgt.

**6.** Reifen nach einem der Ansprüche 1 bis 5, wobei, wenn eine Glasübergangstemperatur in °C der zweiten Kautschukzusammensetzung als Tg2 bezeichnet wird, Tg2 höher als -30°C ist.

**7.** Reifen nach einem der Ansprüche 1 bis 6, wobei, wenn ein tan $\delta$ bei 30°C der ersten Kautschukzusammensetzung als 30°C tan $\delta$1 bezeichnet wird, 30°C tan $\delta$1 weniger als 0,30 beträgt, wobei ein "30°C tan $\delta$1" ein Verlusttangens ist, der unter Bedingungen einer Temperatur bei 30°C, einer anfänglichen Dehnung von 5%, einer dynamischen Dehnung von 1%, einer Frequenz von 10 Hz und eines Streckungsmodus gemessen ist.

**8.** Reifen nach einem der Ansprüche 1 bis 7, wobei eine Länge, in einer Reifenbreitenrichtung (W), eines Positivprofilteils (3) von den Positivprofilteilen, welcher sich auf einer Reifenmittellinie (CL) befindet, oder in einem Fall, wo eine Umfangshauptrille (2) auf der Reifenmittellinie (CL) vorhanden ist, eines Positivprofilteils (3) von den Positivprofilteilen, welcher der Reifenmittellinie (CL) am nächsten ist, sich von der äußeren Seite zur inneren Seite hin in der Reifenradialrichtung vergrößert.

**9.** Reifen nach einem der Ansprüche 1 bis 8, wobei mindestens eine Kautschukkomponente von der Kautschukkomponente der ersten Kautschukzusammensetzung und der Kautschukkomponente der zweiten Kautschukzusammensetzung mindestens einen von einem Butadien-Kautschuk und einem Isopren-basierten Kautschuk umfasst.

**10.** Reifen nach einem der Ansprüche 1 bis 9, wobei die Laufstreifenoberfläche eine sich verbreiternde Umfangsrille (6) umfasst, deren Rillenbreite sich auf der inneren Seite in der Reifenradialrichtung verbreitert.

**11.** Reifen nach Anspruch 10, wobei die sich verbreiternde Umfangsrille (6) auf einem Positivprofilteil (3) vorhanden ist, der sich auf der Reifenmittellinie, oder in einem Fall, wo eine Umfangshauptrille (2) auf der Reifenmittellinie (CL) vorhanden ist, auf einem Positivprofilteil, der dem Reifenmittelteil am nächsten ist, befindet.

**12.** Reifen nach einem der Ansprüche 1 bis 11, wobei die Laufstreifenoberfläche des Schulterbereichs (Sh) eine oder mehrere kleine Öffnungen umfasst, deren Öffnungsflächen größer als 0,1 $mm^2$ und kleiner als 15 $mm^2$ sind.

**13.** Reifen nach einem der Ansprüche 1 bis 12, wobei die Laufstreifenoberfläche des Schulterbereichs (Sh) mindestens eine oder mehrere schmale Umfangsrillen (8) umfasst.

**Revendications**

**1.** Pneumatique comprenant une partie de bande de roulement,

dans lequel la partie de bande de roulement comprend au moins

une première couche de caoutchouc (4) située sur un côté le plus externe dans une direction radiale de pneumatique, et
une seconde couche de caoutchouc (5) adjacente à un côté interne de la première couche de caoutchouc (4) dans la direction radiale de pneumatique,

dans lequel une surface de bande de roulement de la partie de bande de roulement comprend

deux ou plus de deux rainures principales circonférentielles (2) s'étendant dans une direction circonférentielle de pneumatique (C) et
des parties d'appui (3) partitionnées par les rainures principales circonférentielles (2),

dans lequel au moins une rainure principale circonférentielle (2) parmi les rainures principales circonférentielles est formée de telle manière que la partie la plus profonde de sa partie inférieure de rainure est située sur un côté interne dans la direction radiale de pneumatique par rapport à une partie la plus externe de la seconde couche de caoutchouc (5) dans une partie d'appui (31, 32) adjacente à l'au moins une rainure principale circonférentielle (2),
dans lequel une zone de contact de sol de la surface de bande de roulement est divisée en trois par deux lignes droites qui trisectent une largeur maximum de contact de sol (L) de la zone de contact de sol et qui sont parallèles à la direction circonférentielle de pneumatique (C), une portion centrale d'eux est rapportée comme une zone de couronne (Cr), et chaque portion sur les deux côtés de la zone de couronne (Cr) est rapportée comme une zone

d'épaulement (Sh),
dans lequel, lorsqu'un rapport d'appui de la zone de couronne (Cr) est rapportée comme $LAND_{Cr}$ et qu'un rapport d'appui de la zone d'épaulement (Sh) est rapportée comme $LAND_{Sh}$, $LAND_{Cr}$ et $LAND_{Sh}$ satisfont l'inégalité suivante :

$$(1) \quad LAND_{Sh}/LAND_{Cr} > 1,00,$$

dans lequel la première couche de caoutchouc (4) est composée d'une première composition de caoutchouc, la première composition de caoutchouc comprenant
un composant de caoutchouc comprenant un caoutchouc de styrène-butadiène,
dans lequel une teneur du caoutchouc de styrène-butadiène dans le composant de caoutchouc est supérieure à 45 % en masse
et
de la silice,
dans lequel la seconde couche de caoutchouc (5) est composée d'une seconde composition de caoutchouc, la seconde composition de caoutchouc comprenant
un composant de caoutchouc comprenant un caoutchouc de styrène-butadiène,
dans lequel une teneur du caoutchouc de styrène-butadiène dans le composant de caoutchouc est supérieure à 45 % en masse
et
de la silice et
dans lequel lorsqu'une teneur en styrène en % en masse du composant de caoutchouc de la première composition de caoutchouc est rapportée comme St1 et qu'une teneur en styrène en % en masse du composant de caoutchouc de la seconde composition de caoutchouc est rapportée comme St2, au moins un de St1 et St2 est de moins de 16,0,
dans lequel lorsqu'une tan δ à 0 °C de la première composition de caoutchouc est rapportée comme 0 °C tan δ1 et qu'une tan δ à 0 °C de la seconde composition de caoutchouc est rapportée comme 0 °C tan δ2, 0 °C tan δ1 et 0 °C tan δ2 satisfont l'inégalité suivante,

$$(2) \quad 0\ °C \tan \delta 2/0\ °C \tan \delta 1 > 1,00$$

où une « 0 °C tan δ » est une tangente de perte mesurée sous une condition d'une température à 0 °C, une contrainte initiale de 10 %, une contrainte dynamique de 2,5 %, une fréquence de 10 Hz, et un mode d'extension.

**2.** Pneumatique selon la revendication 1, dans lequel 0 °C tan δ2, $LAND_{Cr}$ et $LAND_{Sh}$ satisfont l'inégalité suivante,

$$(3) \quad 0\ °C \tan \delta 2 \times (LAND_{Sh}/LAND_{Cr}) > 0,50.$$

**3.** Pneumatique selon la revendication 1 ou 2, dans lequel 0 °C tan δ1, $LAND_{Cr}$ et $LAND_{Sh}$ satisfont l'inégalité suivante,

$$(4) \quad 0\ °C \tan \delta 1 \times (LAND_{Sh}/LAND_{Cr}) < 3,00$$

**4.** Pneumatique selon l'une quelconque des revendications 1 à 3, dans lequel le côté droit de l'inégalité (1) est 1,15.

**5.** Pneumatique selon l'une quelconque des revendications 1 à 4, dans lequel le côté droit de l'inégalité (2) est 1,10.

**6.** Pneumatique selon l'une quelconque des revendications 1 à 5, dans lequel, lorsqu'une température de transition vitreuse en °C de la seconde composition de caoutchouc est rapportée comme Tg2, Tg2 est supérieur à -30 °C.

**7.** Pneumatique selon l'une quelconque des revendications 1 à 6, dans lequel, lorsqu'une tan δ à 30 °C de la première composition de caoutchouc est rapportée comme 30 °C tan δ1, 30 °C tan δ1 est de moins de 0,30, une « 30 °C tan δ » étant une tangente de perte mesurée sous une condition d'une température à 30 °C, une contrainte initiale de 5 %, une contrainte dynamique de 1 %, une fréquence de 10 Hz, et un mode d'extension.

**8.** Pneumatique selon l'une quelconque des revendications 1 à 7, dans lequel une longueur, dans une direction de largeur de pneumatique (W), d'une partie d'appui parmi les parties d'appui qui est située sur une ligne centrale de

pneumatique (CL) dans un cas où une rainure principale circonférentielle (2) est présente sur la ligne centrale de pneumatique (CL) augmente du côté externe vers le côté interne dans la direction radiale de pneumatique.

**9.** Pneumatique selon l'une quelconque des revendications 1 à 8, dans lequel au moins un composant de caoutchouc du composant de caoutchouc de la première composition de caoutchouc et du composant de caoutchouc de la seconde composition de caoutchouc comprend au moins un d'un caoutchouc de butadiène et d'un caoutchouc à base d'isoprène.

**10.** Pneumatique selon l'une quelconque des revendications 1 à 9, dans lequel la surface de bande de roulement comprend une rainure circonférentielle d'élargissement (6) dont la largeur de rainure s'élargit sur le côté interne dans la direction radiale de pneumatique.

**11.** Pneumatique selon la revendication 10, dans lequel la rainure principale circonférentielle d'élargissement (6) est présente sur une partie d'appui (3) située sur la ligne centrale de pneumatique ou sur une partie d'appui la plus proche de la partie centrale de pneumatique dans un cas où une rainure principale circonférentielle (2) est présente sur la ligne centrale de pneumatique (CL).

**12.** Pneumatique selon l'une quelconque des revendications 1 à 11, dans lequel la surface de bande de roulement de la zone d'épaulement (Sh) comprend une ou plusieurs petites ouvertures dont les zones d'ouverture sont plus grandes que 0,1 $mm^2$ et plus petites que 15 $mm^2$.

**13.** Pneumatique selon l'une quelconque des revendications 1 à 12, dans lequel la surface de bande de roulement de la zone d'épaulement (Sh) comprend au moins une ou plusieurs rainures étroites circonférentielles (8).

FIG. 1

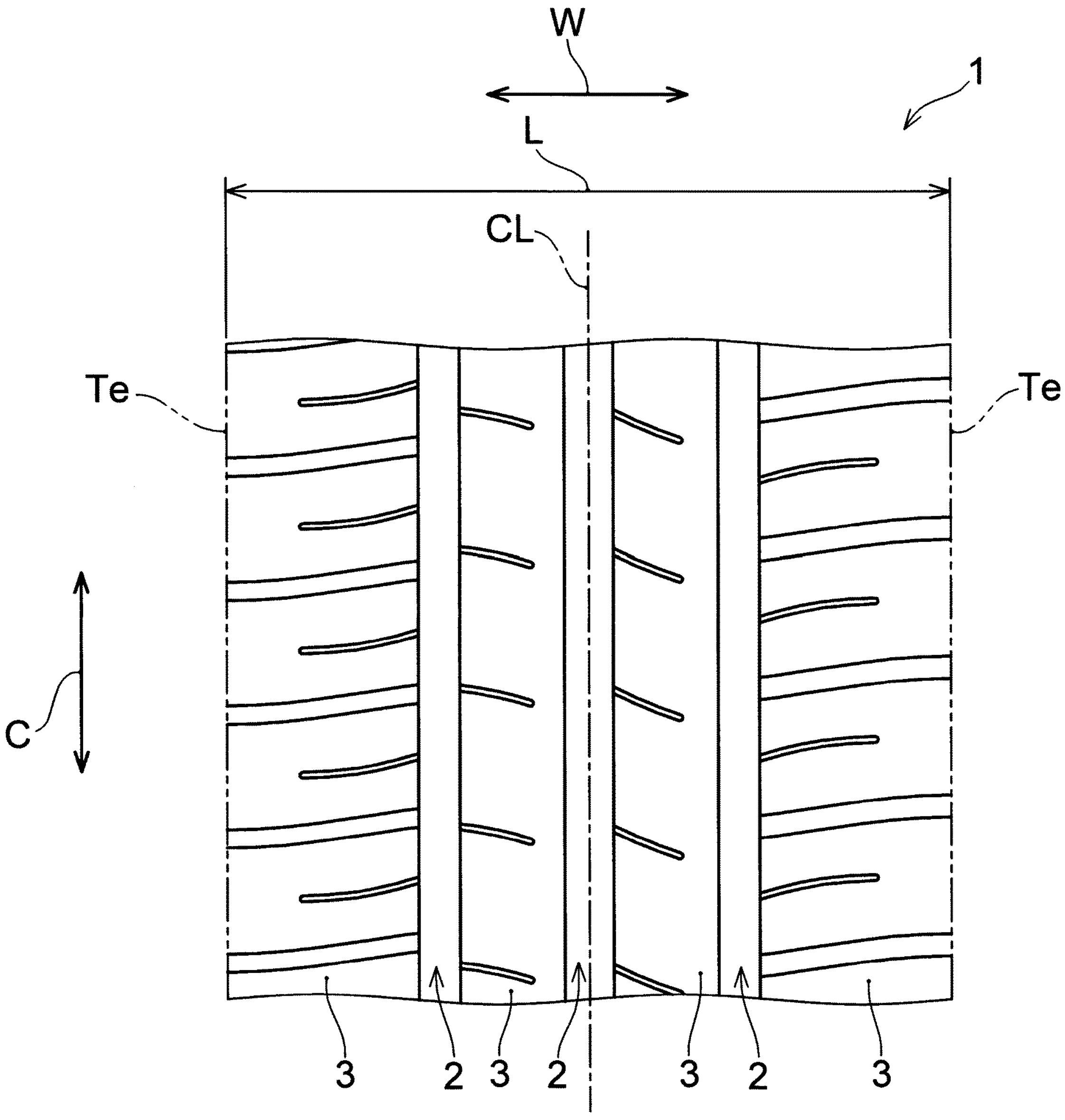


FIG. 2

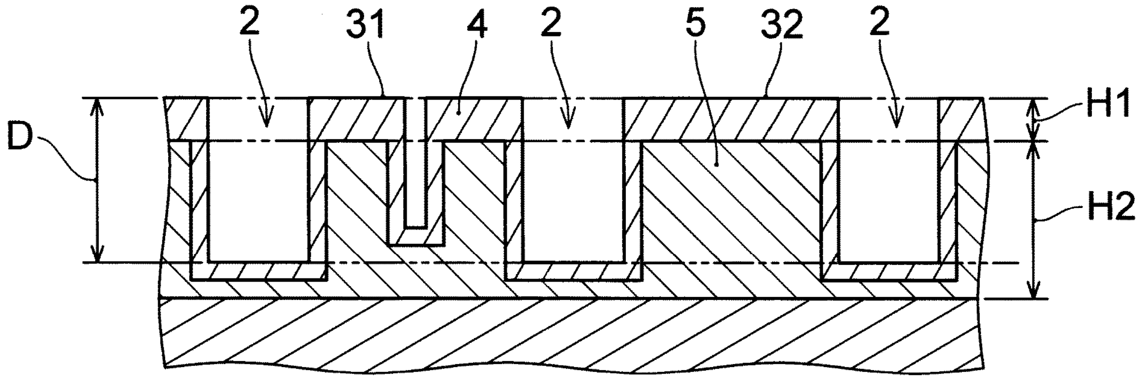

FIG. 3

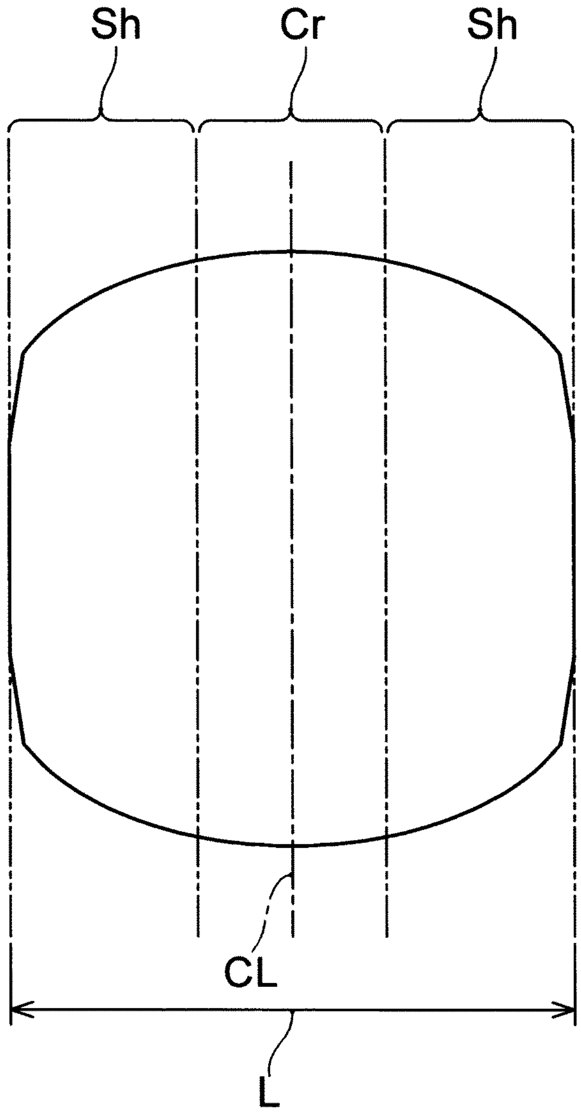

FIG. 4

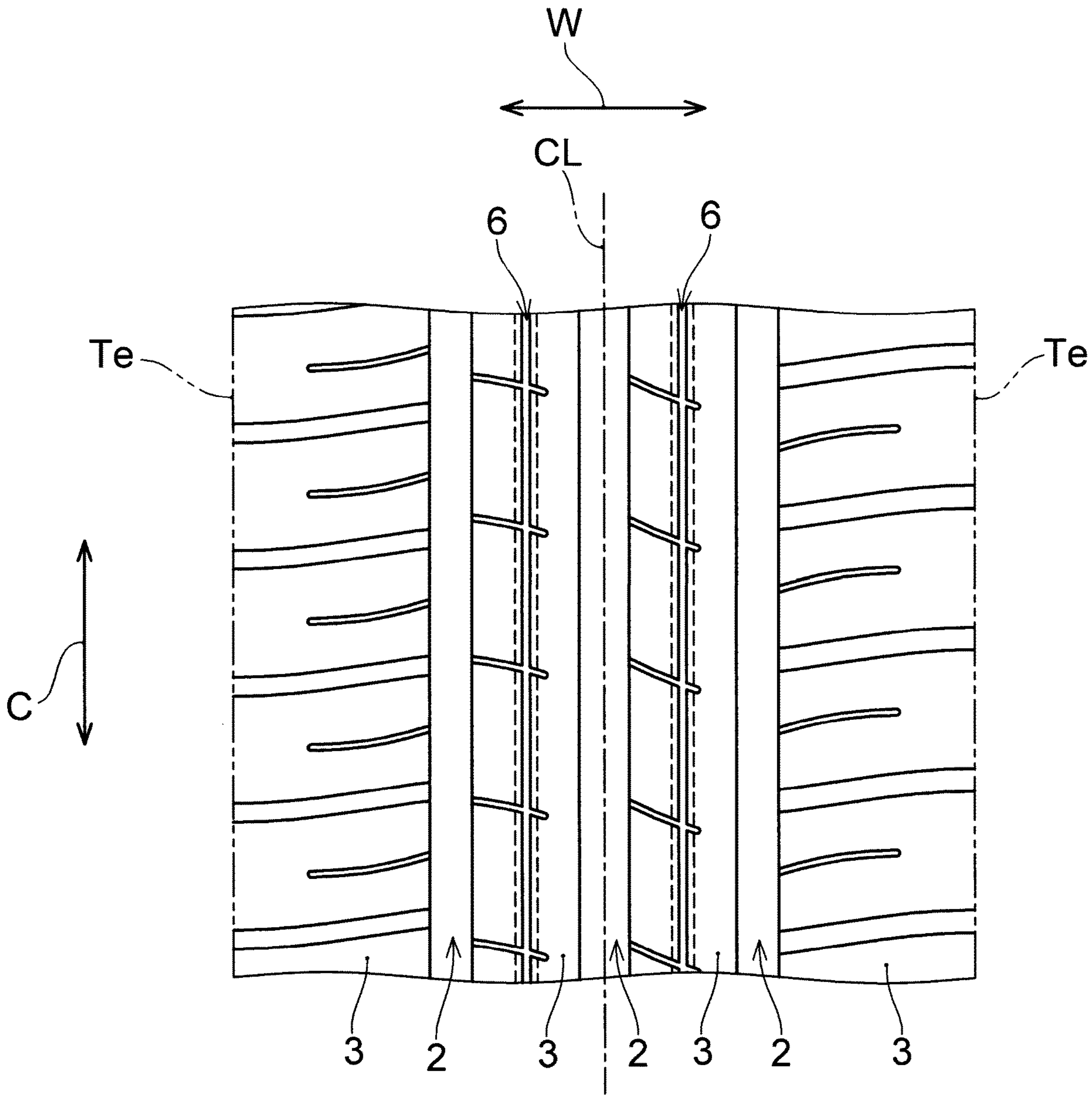

FIG. 5

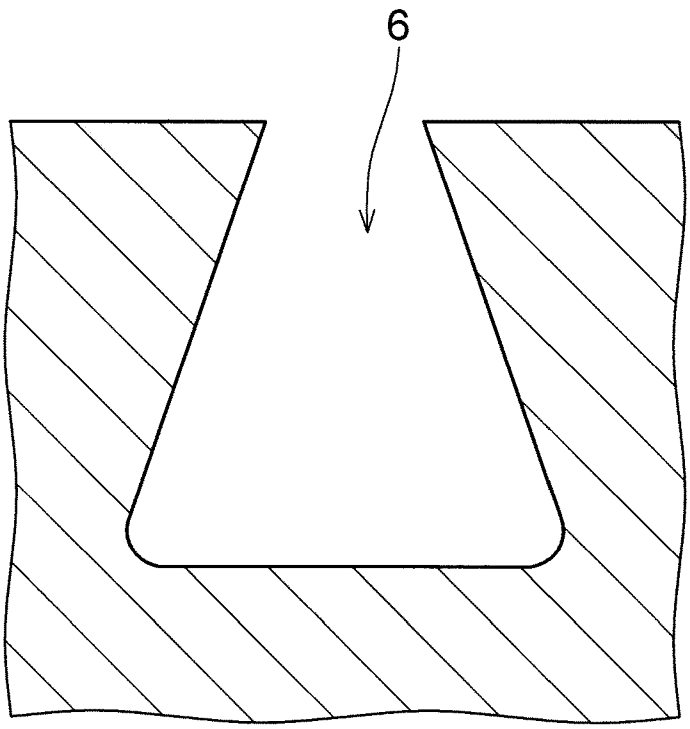

FIG. 6

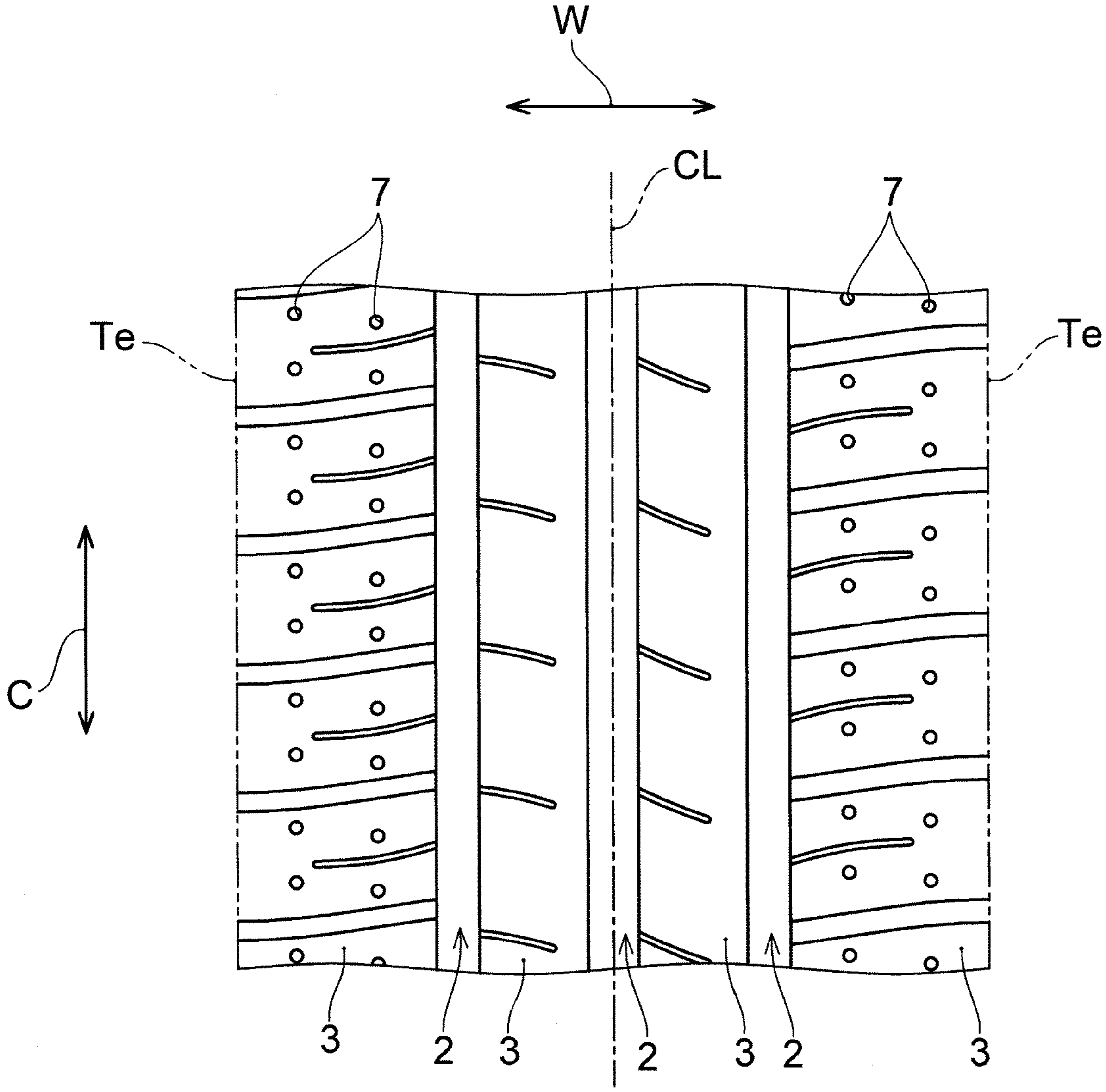

FIG. 7

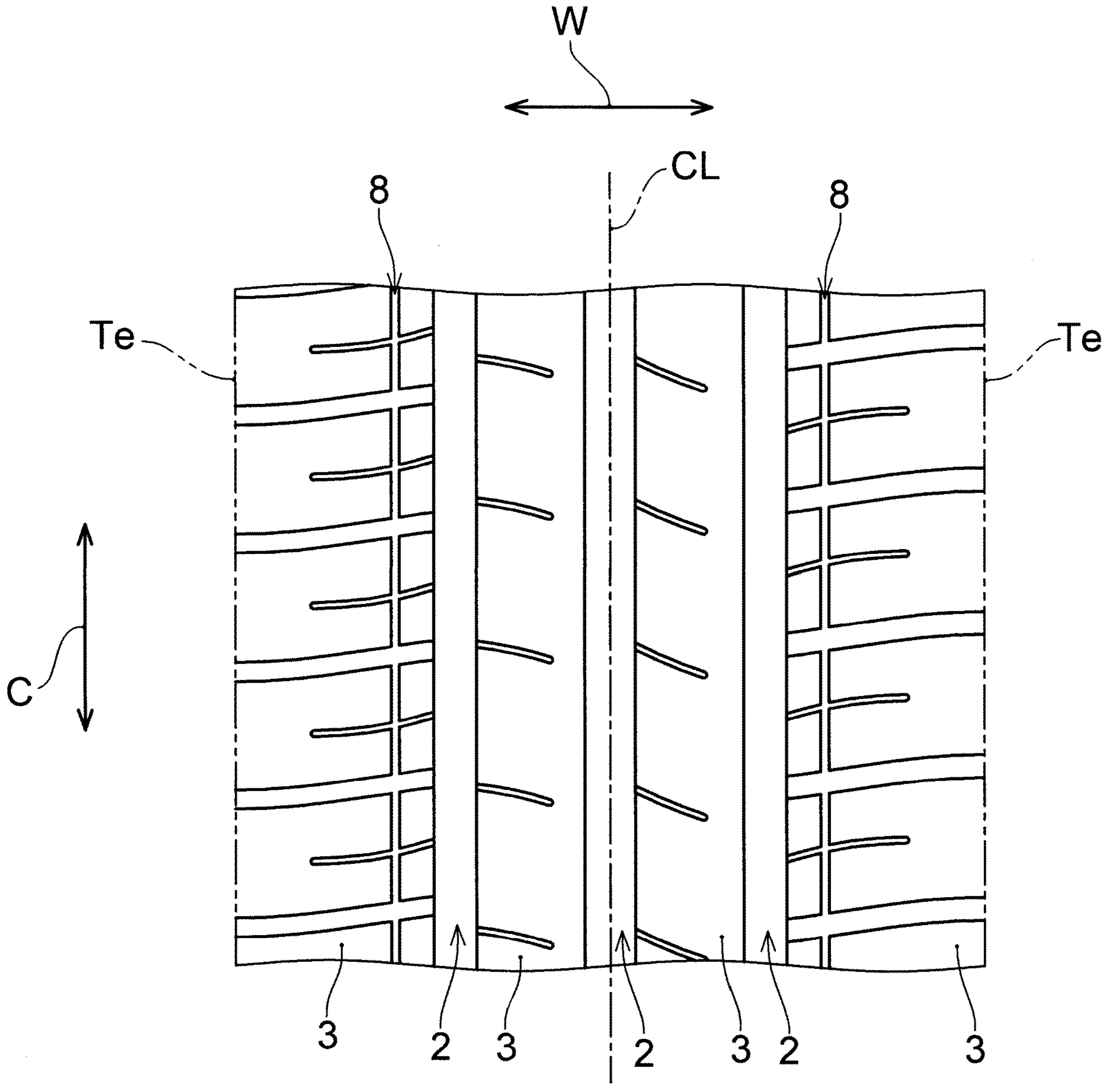

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3213127 B
- EP 3950386 A
- US 2016001599 A
- US 2016176233 A
- JP 2009002594 A


### Non-patent literature cited in the description


- Akita Prefectural University Web Journal. 2019, vol. 6, 216-222